(19) Europäisches Patentamt
European Patent Office
Office européen des brevets

(11) **EP 4 707 886 A2**

(12) **EUROPEAN PATENT APPLICATION**

(43) Date of publication:
**11.03.2026 Bulletin 2026/11**

(21) Application number: **25220916.8**

(22) Date of filing: **02.05.2024**

(51) International Patent Classification (IPC):
***G02B 6/32*** *(2006.01)*

(52) Cooperative Patent Classification (CPC):
**G02B 6/4296; G02B 6/0281; G02B 6/14;
G02B 6/262**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.05.2023 US 202363499700 P
02.05.2023 US 202363499701 P
02.05.2023 US 202363499702 P
02.05.2023 US 202363499703 P
02.05.2023 US 202363499705 P
17.10.2023 US 202363591051 P
17.10.2023 US 202363591053 P**

(62) Document number(s) of the earlier application(s) in
accordance with Art. 76 EPC:
**24728826.9 / 4 701 810**

(71) Applicant: **nLIGHT Inc.
Camas, Washington 98607 (US)**

(72) Inventor: **The designation of the inventor has not
yet been filed**

(74) Representative: **Dehns
10 Old Bailey
London EC4M 7NG (GB)**

Remarks:
This application was filed on 04-12-2025 as a
divisional application to the application mentioned
under INID code 62.

(54) **ENGINEERED DIVERGENCE DISTRIBUTIONS**

(57) An optical beam delivery system configured to provide a divergence distribution mapped from an azimuthally non-symmetric core shape is provided. The system comprises a step-index fiber configured to provide an initial beam, the step-index fiber having the azimuthally non-symmetric core shape, and a lens coupled to the step-index fiber to receive therefrom the initial beam and convert it to a modified beam having the mapped divergence distribution.

*Fig. 38*

**Description**

RELATED APPLICATIONS

This application claims priority benefit of U.S. Provisional Patent Application Nos. 63/499,700; 63/499,701; 63/499,702; 63/499,703; 63/499,705 filed May 2, 2023; and U.S. Provisional Patent Application Nos. 63/591,051 and 63/591,053 filed October 17, 2023. Each application is hereby incorporated by reference in its entirety.

TECHNICAL FIELD

The technology disclosed herein relates to fiber lasers and fiber-coupled lasers. More particularly, the disclosed technology relates to optical fiber assemblies with short-focal-length lenses.

BACKGROUND INFORMATION

Some existing approaches to adjust magnification of a laser beam employ free-space optics (lenses, mirrors, etc.). Free-space optical systems are plagued by multiple problems that become more acute as the optical power level is increased: they are expensive; they introduce excess loss (reduced efficiency); they are prone to misalignment, contamination, and damage; and their performance can be degraded by vibration, temperature variations, other environmental factors, and optical power changes (thermal lensing). Elimination of free-space optics thus decreases system cost and complexity and increases system performance, stability, and reliability.

As described in U.S. Patent No. 10,663,768 of Martinsen et al. (which issued May 26, 2020, to nLIGHT, Inc.) and its related patents, nLIGHT, Inc. developed technology for varying beam properties by controlling a spatial intensity distribution of a laser beam, i.e., adjusting its near-field intensity distribution. The '768 patent describes a fiber operable to provide a laser beam having variable beam characteristics (VBC) that may reduce cost, complexity, optical loss, or other drawbacks of conventional methods.

Some industrial laser applications, such as metal cutting, welding, brazing, heat treating, and additive manufacturing, benefit from structured laser beams such as flat-top (also referred to as top-hat) and donut (ring) beams. For instance, industrial laser processes such as cutting, welding, additive manufacturing, brazing, cladding, and cleaning can benefit from a flat-top laser beam intensity distribution due to its relatively even distribution of laser power across the entire cross section of the beam. A saddle beam shape (also referred to as a saddle beam or saddle mode) is defined by an intensity profile of light having an annulus with a lower, non-zero intensity in the center. A pedestal beam shape (or pedestal shape or pedestal mode) is similar to a saddle shape except the intensity in the center is higher than in the surrounding halo. A ring beam (also referred to as a ring mode) has an annular shape with little or no power in the center. For the purposes of this disclosure, a ring mode is therefore considered to be a specific type of saddle beam shape having little or no power in the center of the beam. Flat-top, ring, saddle, and pedestal beam profiles (as well as other beam profiles) can be achieved at the output of a ring fiber, with the shape being determined by the relative power levels in each core of the ring fiber. Additional details of generating beam shapes using VBC laser are described in the '768 patent.

U.S. Patent Nos. 9,250,390 and 9,823,422 of Muendel and Kliner describe an optical delivery waveguide for a material laser processing system that includes a small lens at an output end of the delivery waveguide, transforming laser beam divergence inside the waveguide into a spot size and shape after the lens. The waveguide has a single core (e.g., step-index), and by varying one or both the input convergence angle and launch angle of the laser beam launched into the waveguide, the output spot size and shape can be continuously varied. This technology does not use multiple cores to generate different beam sizes and shapes but rather uses changes in divergence that are mapped to size and shape by the output lens.

SUMMARY OF THE DISCLOSURE

Embodiments described herein employ a multimode divergence-preserving fiber between short-focal-length lenses at the fiber input and output (e.g., graded index (GRIN) lenses) to transmit a laser beam. The input lens maps position at the front focal plane to angle within the divergence-preserving fiber, and the output lens maps the angle to position at the back focal plane. In the disclosed embodiments, various step-index core and cladding sizes may be used, depending on the application, and different lens designs may be used (e.g., GRIN, curved end cap, or ball lens). For high-power applications, one embodiment is to employ at the output a GRIN lens (i.e., a ¼ pitch length of GRIN fiber) with an end cap.

By changing a source fiber that is coupled to the input lens, different all-fiber embodiments are possible, which provide desirable functionality for materials processing and other industrial applications of lasers. Specifically, these embodiments allow (1) an all-fiber approach (i.e., without the use of free-space optics) for imaging and optionally magnifying a laser beam that, in combination with a VBC fiber or ring fiber, provides an image of a structured or shaped laser beam; (2) fiber delivery of high optical powers with one or both longer fiber lengths and smaller output beam diameters than is possible using conventional fibers because of limitations associated with nonlinear processes in the fiber; (3) generation of a composite beam shape, such as a central spot surrounded by one or more rings, without using multiple guiding regions in the fiber to maintain this shape; (4) limitation of the output divergence or numerical aperture (NA) defined as $\sin(\theta)$, where $\theta$ is the half-angle divergence of the beam; (5) generation of a flat-top far-field (divergence) distribution; (6) delivery of a shaped beam profile from a fiber-to-fiber coupler (FFC) or fiber-to-fiber switch (FFS) without the use of a multi-core process fiber.

A common characteristic of these embodiments is that they need not employ free-space optics or free-space beams. The fiber assemblies can thus be spliced to the output fibers of fiber lasers or other fiber-coupled lasers to provide an all-fiber path between the laser source(s) and the process optics (or other components downstream of the delivery fiber). By enabling an all-fiber format, these embodiments address limitations of previous technologies that employ free-space optics, as well as offering other advantages. (Of course, embodiments employing an FFC or FFS employ free-space optics by definition, but the laser system upstream of the FFC or FFS does not require use of free-space optics.)

Lower output divergence (compared with the use of a ring fiber) is achieved in some embodiments. Limiting the divergence of the output beam (e.g., when combined with a VBC fiber) may facilitate meeting performance specifications of industrial applications (e.g., cutting, welding, and additive manufacturing). The near-field diameter and far-field divergence or NA of the output beam can be optimized for a given application by choice of the relative focal lengths of two GRIN fiber segments (i.e., by adjusting the magnification) and by choice of the core diameter of the divergence-preserving fiber.

End users of high-power fiber lasers sometimes use scanners and process optics having an NA of 0.10-0.14. These applications benefit from a VBC fiber system having a low-NA beam that does not clip excessive power on the NA-limited aperture.

The disclosed embodiments allow for a splice located in the divergence-preserving fiber. This splice facilitates manufacturing and field service, i.e., the assembly downstream from the splice be added (spliced) in the factory, enabling different product configurations, and/or it can serve as a field-replaceable unit (FRU) that can be spliced to the system at a service depot or in the field.

Some applications may also include a process fiber and FFC or FFS. The fiber downstream of the FFC or FFS (i.e., the process fiber) can be an FRU.

The present embodiments address the industrial applications summarized above (and other applications) in a manner that avoids some disadvantages of the prior art. In particular, the embodiments provide one or more of the following advantages: (1) all-fiber technologies, i.e., elimination of free-space optics and their inherent limitations and disadvantages; (2) elimination of fiber tapers, which have manufacturing drawbacks; (3) reduced use or elimination of relatively complex and expensive multi-core fibers; (4) maintaining compatibility with a range of input and output beam characteristics to serve a variety of applications with minimal system complexity or part count; and (5) compatibility with optical systems with NA restrictions.

In one aspect, an optical beam delivery system for image relaying includes a source fiber configured to provide an input beam. This input beam is defined by a beam parameter product (BPP) and an azimuthally symmetric input transverse spatial intensity distribution. The system features a first GRIN lens configured to convert the input transverse spatial intensity distribution of the input beam into an intermediate beam with a divergence distribution. This first GRIN lens has a first effective focal length. A second GRIN lens, coupled to the first GRIN lens, is configured to receive the intermediate beam from the first GRIN lens, map the divergence distribution to an output beam with an output transverse spatial intensity distribution representing an image of the input beam, and maintain the BPP of the output beam. The second GRIN lens has a second effective focal length that differs from the first effective focal length. Both the first and second GRIN lenses have ¼ pitch length and may include zero or more ½ pitch multiples thereof.

Additional aspects of the optical beam delivery system may include differences in the ¼ pitch length of the first and second GRIN lenses. The effective focal lengths of the first and second lenses may be selected either to magnify or demagnify the output beam compared to the input beam. The lengths of the first and second effective focal lengths are in the range of about 0.1 mm to about 2.0 mm. The input transverse spatial intensity distribution can be Gaussian, super-Gaussian, flat-top, ring-shaped, or saddle-shaped. Additionally, the source fiber may be a ring fiber or a VBC fiber.

In a related aspect, a method of relaying an input beam from a laser source includes guiding the input beam through a source fiber, directing it to a first GRIN lens that converts the input transverse spatial intensity distribution to an intermediate beam with a divergence distribution. The intermediate beam is then directed to a second GRIN lens, which maps the divergence distribution to an output beam that represents an image of the input beam and maintains the BPP. The first and second GRIN lenses each have ¼ pitch length and may include zero or more ½ pitch multiples thereof.

This method may further involve varying the ¼ pitch lengths of the first and second GRIN lenses and selecting the effective focal lengths to either magnify or demagnify the output beam relative to the input beam. The focal lengths of these lenses range from about 0.1 mm to about 2.0 mm. The input transverse spatial intensity distribution options include Gaussian, super-Gaussian, flat-top, ring-shaped, or saddle-shaped, and the source fiber may be a ring fiber or a VBC fiber.

In one aspect, an optical beam delivery system includes a source fiber configured to provide an input beam with a transverse spatial intensity distribution and an image relay fiber assembly. This assembly comprises a first lens that converts the input transverse spatial intensity distribution of the input beam into an intermediate beam with a divergence distribution. A divergence-preserving fiber receives this intermediate beam and maintains its divergence distribution along its length. A second lens receives the intermediate beam from the divergence-preserving fiber and produces an output beam as an image of the input beam.

In another aspect, a method is for relaying an input beam from a laser source, the input beam having an input transverse spatial intensity distribution. The method entails directing the input beam to a first lens that is configured to map the input transverse spatial intensity distribution to a divergence distribution of an intermediate beam; guiding with a divergence-preserving fiber the intermediate beam while preserving its divergence distribution along a length of the divergence-preserving fiber; and directing the intermediate beam to a second lens configured to map the divergence distribution into an output transverse spatial intensity distribution so as to provide an output beam as an image of the input beam. Options for this method may involve coupling an output end cap, or splicing the fiber to adjust the core and cladding diameters of the divergence-preserving fiber.

The optical beam delivery system and method may include options where the input transverse spatial intensity distribution is Gaussian, super-Gaussian, flat-top, ring-shaped, or saddle-shaped, and the source fiber may be a ring fiber. Additionally, either the first or second lens, or both, may be GRIN lenses with ¼ pitch length and may include zero or more ½ pitch multiples thereof, and could be spliced to the divergence-preserving fiber or be ball lenses or radiused end caps. The divergence-preserving fiber could be a step-index fiber, and both lenses could have a common effective focal length, or each lens could have different effective focal lengths. The system might also include a variable or static input transverse spatial intensity distribution. Further enhancements may include an output end cap coupled to the output of the second lens, a splice in the divergence-preserving fiber, or the incorporation of an FFC, an FFS, or one or more cladding light strippers (CLSs) along the divergence-preserving fiber.

A method to modify the system may involve removing a portion of the divergence-preserving fiber and splicing a replacement divergence-preserving fiber that might include a GRIN lens, ball lens, or radiused end cap acting as the second lens. This method could be part of a larger effort to either magnify or demagnify the output beam.

In one aspect, an optical beam delivery system includes a source fiber with a first effective mode area, configured to provide an input beam. This system also comprises a fiber assembly featuring a first lens that transitions the input beam from the first effective mode area to a larger second effective mode area. A divergence-preserving fiber follows, maintaining this second effective mode area along with a core diameter larger than that of the source fiber. A second lens then refocuses the input beam to produce an output beam.

The method associated with this system aims to reduce nonlinear optical effects by directing the input beam through a first lens, which transitions it to a larger second effective mode area within an intermediate beam. This beam is then guided by a divergence-preserving fiber, which maintains the divergence distribution along its length, and ultimately refocused by a second lens to create the output beam.

The system and method may include variations where the input transverse spatial intensity distribution is Gaussian, super-Gaussian, flat-top, ring-shaped, or saddle-shaped. The source fiber might be a ring fiber. Either or both lenses in the system can be GRIN lenses with ¼ pitch length that may include additional ½ pitch multiples, or they can be spliced directly to the divergence-preserving fiber. Alternatively, these lenses may be ball lenses or radiused end caps. The divergence-preserving fiber itself may be a step-index fiber.

Furthermore, both lenses can share a common effective focal length, or they may have differing effective focal lengths to either magnify or demagnify the output beam. The system may also feature an input transverse spatial intensity distribution that is either variable or static, and enhancements could include an output end cap coupled to the second lens, a splice in the divergence-preserving fiber, or the incorporation of an FFC, an FFS, or CLSs along the fiber.

A modification method for this system could involve removing part of the divergence-preserving fiber and splicing a replacement divergence-preserving fiber that includes a GRIN lens as the second lens, e.g., to change magnification or step up or step down one or both the core and cladding.

In one aspect, an optical beam delivery system includes a source fiber with a first effective mode area and is configured to provide an input beam. The system also features a fiber assembly, which includes a first pair of coupled GRIN lenses: a first GRIN lens with a first effective focal length and a second GRIN lens with a second effective focal length that is longer than the first. Both the first and second GRIN lenses have ¼ pitch length and may include zero or more ½ pitch multiples thereof. This first pair of coupled GRIN lenses is configured to transition the input beam from the first effective mode area to an intermediate beam in a second effective mode area that is larger than the first. A step-index fiber guides the intermediate beam and features the second effective mode area and a core diameter larger than that of the source fiber. Additionally, a second pair of coupled GRIN lenses comprises a third GRIN lens with a third effective focal length and a fourth GRIN lens with a fourth effective focal length that differs from the third. Both the third and fourth GRIN lenses have ¼ pitch length and may include zero or more ½ pitch multiples thereof. This second pair of coupled GRIN lenses is configured to magnify or demagnify the intermediate beam to generate an output beam. The system might include configurations where the third effective focal length is either greater than or less than the fourth effective focal length. It might also be configured such that the first effective focal length equals the fourth effective focal length, and the second equals the third effective focal length.

In one aspect, the associated method of reducing nonlinear optical effect generation in relation to a desired length of process or feeding fiber suitable for guiding an input beam with a specified input effective mode area involves directing the input beam to the described first pair of coupled GRIN lenses. This first pair transitions the beam from the input effective mode area to a larger intermediate mode area. After passing through the second GRIN lens, the intermediate beam is guided by a step-index fiber that includes the larger effective mode area and then directed to the second pair of coupled GRIN lenses. This second pair, including a third GRIN lens and a fourth GRIN lens with distinct effective focal lengths, is designed to either magnify or demagnify the intermediate beam to produce an output beam. Similar to the system configuration, the method may specify that the third effective focal length is greater than or less than the fourth effective focal length, and it may feature a focal length equivalence where the first equals the fourth and the second equals the third effective focal lengths.

In one aspect, an optical beam delivery system includes a source fiber configured to provide an input beam along a first optical axis, featuring an input transverse spatial intensity distribution. The system also comprises a fiber assembly with a second optical axis that is centrally located and radially offset in a transverse direction from the first optical axis. This assembly includes a first lens configured to convert the input transverse spatial intensity distribution into a divergence distribution of an intermediate beam, a divergence-preserving fiber that receives the intermediate beam and preserves its divergence distribution along its length, and a second lens configured to receive the intermediate beam from the divergence-preserving fiber and to convert the divergence distribution into an output transverse spatial intensity distribution in an output beam, which includes a structured beam shape. The system may feature options where the structured beam shape is a ring, saddle, or pedestal shape. Additionally, the source fiber may include a central longitudinal axis that is radially offset from the first optical axis. The system could also be designed such that the diameter of the structured beam shape is proportional to the amount of offset between the first and second optical axes. It might include a fiber bundle comprising the source fiber and at least one other fiber offset in the transverse direction from the second optical axis. In some configurations, the source fiber is a multicore fiber with at least one core offset in the transverse direction from the second optical axis. The system can also be configured where the first optical axis is the central longitudinal axis for a single central core, and where the source fiber is coupled with an offset splice to the first lens. Additionally, the source fiber may consist of a single core that defines the first optical axis. The system's input transverse spatial intensity distribution can be Gaussian, super-Gaussian, flat-top, ring, saddle, or pedestal shaped. It may also include a ring fiber as the source fiber. Further, the system might include a first source fiber and a first fiber assembly, along with a second fiber assembly for a second source fiber, where each source fiber has separately controllable power to form a composite shape.

In another aspect, a method of producing an output beam with an output transverse spatial intensity distribution defining a composite beam shape is defined by the superposition of a first intensity distribution and a second intensity distribution. This method includes generating the first intensity distribution by converting an input transverse spatial intensity distribution of a first beam to a first divergence distribution and converting this first divergence distribution to a first portion of the output transverse spatial intensity distribution, where this first portion may be a ring or saddle shape. It also includes guiding a second beam and converting its second divergence distribution to a second portion of the output transverse spatial intensity distribution, where the first and second divergence distributions are combined at a fused fiber combiner. The method might specify that the second portion of the output transverse spatial intensity distribution is centrally located in the ring or saddle shape of the first portion, or that the second portion is non-overlapping with the first portion. It may also involve a first laser source for the first beam and a second laser source for the second beam, each having separately controllable power. Additional steps might include receiving the first beam at a fiber assembly including a first lens and a divergence-preserving fiber, receiving the second beam at a step-index fiber, and combining outputs from the fiber assembly and the step-index fiber to generate an intermediate beam that is converted by a second lens to the output transverse spatial intensity distribution. Further modifications might include receiving different beams at different fiber assemblies, each with an input lens and an associated divergence-preserving fiber, and combining outputs from each to generate an intermediate beam that is converted by a second lens to the output transverse spatial intensity distribution. Alternatively, the method might include receiving the first and second beams at a fiber assembly, with the first beam being offset from the second beam, and this assembly including a first lens, a divergence-preserving fiber, and a second lens, where the first lens is configured to generate the first and second divergence distributions of an intermediate beam, the divergence-preserving fiber is configured to receive the intermediate beam and preserve its divergence distribution along a length of the divergence-preserving fiber, and the second lens is configured to generate the output transverse spatial intensity distribution.

The system for structured beam shapes or method for composite beams could include one or both of the first and second lenses as GRIN lenses with a ¼ + ½*n pitch length, where n equals zero or any positive integer, or they could be GRIN lenses spliced to the divergence-preserving fiber, ball lenses, or radiused end caps. Additionally, the divergence-preserving fiber could be a step-index fiber. The system or method may specify that the first and second lenses have a common effective focal length or that the first lens has a first effective focal length, and the second lens has a second effective focal length that differs from the first. Further configurations might include an output end cap coupled to the output of the second lens, a splice in the divergence-preserving fiber, or an FFC or an FFS in the divergence-preserving fiber, thus establishing an input divergence-preserving fiber and an output divergence-preserving fiber with the FFC or FFS in between. Additionally, one or more CLSs may be located along the divergence-preserving fiber. The assembly could include a mode scrambling portion. A method to modify the system might involve removing at least a portion of the divergence-preserving fiber from the fiber assembly and splicing onto a remaining portion a replacement divergence-preserving fiber, again to change magnification or step up or down.

In one aspect, an optical beam delivery system is configured to provide an output beam with a maximum numerical aperture ($NA_{max}$). The system includes a source fiber that provides an input beam and a fiber assembly featuring a divergence-preserving fiber with a specified core radius. This fiber is configured to receive an intermediate beam, corresponding to the input beam, and preserve its divergence distribution. An output lens with an effective focal length is configured to convert the divergence distribution to an output beam. The $NA_{max}$ of this output beam is defined by the ratio of the core radius to the effective focal length. The system may also include options where the input transverse spatial intensity distribution of the input beam is Gaussian, super-Gaussian, flat-top, ring-shaped, saddle-shaped, or pedestal-shaped, and the source fiber may be a ring fiber. Additionally, the fiber assembly may include an input lens coupled to the source fiber to convert the input beam to the intermediate beam. The divergence-preserving fiber may be a step-index fiber. Furthermore, the input transverse spatial intensity distribution could be variable or static. Additional features may include an output end cap coupled to the output of the output lens, a splice in the divergence-preserving fiber, an FFC or an FFS within the divergence-preserving fiber, thereby establishing an input and an output divergence-preserving fiber, and optionally one or more CLSs located along the divergence-preserving fiber. A method to modify the optical beam delivery system might involve removing at least a portion of the divergence-preserving fiber from the fiber assembly and splicing a replacement divergence-preserving fiber onto the remaining portion.

In another aspect, a method of providing an output beam with an $NA_{max}$ involves receiving at an optical beam delivery device an input beam, which traverses a divergence-preserving fiber and an output lens. The fiber guides an intermediate beam while preserving its divergence distribution in a core with a specific radius, and the output lens, with an effective focal length, converts this distribution to produce the output beam with the $NA_{max}$, defined by the ratio of the core radius to the effective focal length. This method also includes delivering the output beam to process optics and ensures that the original numerical aperture of the input beam is modified to prevent clipping on the process optic configured for the $NA_{max}$. Additional options for the method include having the input transverse spatial intensity distribution as Gaussian, super-Gaussian, flat-top, ring-shaped, saddle-shaped, or pedestal-shaped, and using a ring fiber as the source. The divergence-preserving fiber may be a step-index fiber, and the optical beam delivery device might further include an input lens coupled to the source fiber to convert the input beam into the intermediate beam. The input transverse spatial intensity distribution could be variable or static. More features could include coupling an output end cap to the output of the output lens, splicing the divergence-preserving fiber, where the splice adjusts the diameter of either the core or the cladding, and including an FFC or an FFS within the divergence-preserving fiber, thereby establishing segments of the divergence-preserving fiber with potentially different core and cladding sizes. The method might also include one or more CLSs along the divergence-preserving fiber or near the splice.

The optical beam delivery system or method for $NA_{max}$ may further include configurations where one or both of the input and output lenses are GRIN lenses with a ¼ + ½*n pitch length, where n is zero or any positive integer, or where the lenses are spliced to the divergence-preserving fiber, are ball lenses, or are radiused end caps. Additionally, the input and output lenses might have a common effective focal length, or the input lens and output lens could have different effective focal lengths, selected either to magnify or demagnify the output beam. Similarly, the method may include steps that align with these configurations, potentially changing the $NA_{max}$ based on a new core radius or effective focal length of a replacement divergence-preserving fiber and associated lens, which might also be a GRIN lens, ball lens, or radiused end cap. Further considerations might involve adjusting the dimensions of the core or cladding of the divergence-preserving fiber to tailor the optical properties as desired.

In one aspect, an optical beam delivery system is designed to provide an output beam with an $NA_{max}$. The system features a source fiber that delivers an input beam, comprising a first portion with lower divergence and a second portion with higher divergence. The system also includes a fiber assembly with a step-index fiber that has a core and cladding, an input lens, and a CLS. The input lens, which can be a single or dual GRIN lens with ¼ pitch length and possible ½ pitch multiples, is positioned between the source fiber and the step-index fiber. It directs the first portion of light into the core and the second portion into the cladding. The CLS then removes the second portion from the cladding, allowing the first portion in the core to be used as the output beam with $NA_{max}$. Additionally, the arrangement may include the second GRIN lens with a smaller core size than the first, positioned between the first GRIN lens and the step-index fiber. The core of the step-index fiber might be larger than that of the source fiber. The system could also feature the input lens and the CLS housed together in a single mechanical package. Further technical details are provided in the accompanying figures, descriptions, and claims.

In another aspect, an optical beam delivery system is designed to provide a flat-top divergence distribution. This system includes a source fiber that provides an input beam, which is initially received by a first lens. This lens converts the input beam into an intermediate beam. A divergence-preserving fiber equipped with a mode-distribution homogenization portion then modifies the intermediate beam to produce a flat-top intensity distribution. A second lens subsequently transforms this distribution into an output beam with the desired flat-top divergence distribution. Additionally, the system may include various configurations in the mode-distribution homogenization portion such as an offset splice, a mode-scrambling portion that could extend throughout the fiber, or a non-circular core that serves the same purpose. The divergence-preserving fiber may also include one or more of a circular core, micro-bends, coils, or macro-bends, each for contributing to the homogenization of mode distribution.

The method related to this system involves several key steps. An input beam is directed to a first lens which maps the beam's input transverse spatial intensity distribution to a divergence distribution of the intermediate beam. The divergence-preserving fiber then guides the beam through its homogenization portion to achieve a flat-top intensity distribution, which is converted by a second lens into an output transverse spatial intensity distribution, creating an output beam with the specified divergence. This method might also involve launching the modified beam towards a process head, ensuring the beam maintains its shape on a workpiece at varying distances.

Furthermore, the system can accommodate input beams with various transverse spatial intensity distributions such as Gaussian or flat-top. It may use GRIN lenses, ball lenses, or radiused end caps in its optical configurations. Additional elements could include different effective focal lengths for the lenses to magnify or demagnify the beam, an output end cap, or a splice in the divergence-preserving fiber to adjust the core and cladding diameters.

In some embodiments, the system can be configured to deliver a divergence distribution from an azimuthally non-symmetric core shape using a step-index fiber with such a core. A lens receives the initial beam from this fiber and converts it into a modified beam with the divergence distribution. The non-symmetric core might be square, rectangular, or include multiple circular cores. A collimator lens can also be part of the system to transform the modified beam into a collimated beam with a specific near-field shape and a defined large depth of focus.

Other technical features may be readily apparent to one skilled in the art from the following figures, description, and claims. The foregoing and other objects, features, and advantages will become more apparent from the following detailed description, which proceeds with reference to the accompanying figures, which may not be drawn to scale.

BRIEF DESCRIPTION OF THE SEVERAL VIEWS OF THE DRAWINGS

To easily identify the discussion of any particular element or act, the most significant digit or digits in a reference number refer to the figure number in which that element is first introduced.

FIG. 1 is a side elevation view of an optical beam delivery system, according to a first image relay embodiment.

FIG. 2 is an annotated block diagram of an optical beam delivery system, according to a second image relay fiber assembly embodiment.

FIG. 3 is an annotated cross section view of an optical beam delivery system showing end views of input fiber options, according to a third image relay embodiment.

FIG. 4 is a table shows a comparison of measured output BPP for example image relay embodiments.

FIG. 5 is an annotated cross section of an optical beam delivery system (top), according to a first reduced nonlinear optical effect generating fiber assembly embodiment, shown with a graph of effective mode areas for each fiber segment in the system (bottom).

FIG. 6 is a pair of side elevation views comparing a conventional step-index delivery fiber and a reduced nonlinear optical effect generating fiber assembly with their corresponding near-field spatial profiles (right), demonstrating that each one provides a near-field beam diameter of approximately 50 microns, according to one embodiment.

FIG. 7 is a plot of experimental results for the systems shown in FIG. 6, demonstrating a reduction in the stimulated Raman scattering (SRS) power for the fiber assembly compared to the conventional approach.

FIG. 8 is an annotated cross section view of an optical beam delivery system showing end views of input and intermediate fiber options, according to a second reduced nonlinear optical effect generating fiber assembly embodiment.

FIG. 9 is a block diagram of a delivery fiber and process head in accordance with one embodiment.

FIG. 10 is a set of two near-field spatial profiles (left) and corresponding divergence distributions (power enclosed versus NA, right) provided by two embodiments of the optical beam delivery system shown in FIG. 1.

FIG. 11 is a side elevation view of an optical beam delivery system, according to a divergence limiting embodiment.

FIG. 12 is a set of simulated near-field and far-field intensity distributions and one-dimensional profile views for the optical beam delivery system of FIG. 11.

FIG. 13 is a power enclosed versus NA plot (divergence distribution) for the optical beam delivery system of FIG. 11.

FIG. 14 is a side elevation view of an optical beam delivery system, according to another divergence limiting embodiment.

FIG. 15 is a set of simulated near-field and far-field intensity distributions and one-dimensional profile views for the optical beam delivery system of FIG. 14.

FIG. 16 is a power enclosed versus NA plot (divergence distribution) for the optical beam delivery system of FIG. 14.

FIG. 17 is a side elevation view of an optical beam delivery system, according to a ring beam generating embodiment.

FIG. 18 is an end view of a source fiber shown in FIG. 17.

FIG. 19 is a side elevation view of a portion of an optical beam delivery system, according to another ring beam generating embodiment.

FIG. 20 is a set of ray trace simulations based on the embodiment of FIG. 19, showing the effect of fiber offset between the axes of the input fiber and the fiber assembly.

FIG. 21 is an end view of a fiber bundle, according to a composite beam shape generating embodiment.

FIG. 22 is an end view of a fiber bundle, according to another composite beam shape generating embodiment.

FIG. 23 is an end view of a multi-core fiber, according to another composite beam shape generating embodiment.

FIG. 24 is another set of ray trace simulations based on one of the embodiments of FIG. 20-FIG. 23 when two cores are active.

FIG. 25 is a side elevation view of an optical beam delivery system for selectively generating different composite beam shapes, according to one embodiment.

FIG. 26 is an experimentally measured near-field intensity distribution for the optical beam delivery system of FIG. 25, showing a two-dimensional (X, Y) intensity distribution (upper plot) and the corresponding one-dimensional (X, Y=0) beam profile (lower plot) at the output of the system when only a first input fiber is guiding a beam.

FIG. 27 is an experimentally measured near-field intensity distribution for the optical beam delivery system of FIG. 25, showing a two-dimensional (X, Y) intensity distribution (upper plot) and the corresponding one-dimensional (X, Y=0) beam profile (lower plot) at the output of the system when only a second input fiber is guiding a beam.

FIG. 28 is an experimentally measured near-field intensity distribution for the optical beam delivery system of FIG. 25, showing a two-dimensional (X, Y) intensity distribution (upper plot) and the corresponding one-dimensional (X, Y=0) beam profile (lower plot) at the output of the system when only a third input fiber is guiding a beam.

FIG. 29 is an experimentally measured near-field intensity distribution for the optical beam delivery system of FIG. 25, showing a two-dimensional (X, Y) intensity distribution (upper plot) and the corresponding one-dimensional (X, Y=0) beam profile (lower plot) at the output of the system when only a fourth input fiber is guiding a beam.

FIG. 30 is an experimentally measured near-field intensity distribution for the optical beam delivery system of FIG. 25, showing a two-dimensional (X, Y) intensity distribution (upper plot) and the corresponding one-dimensional (X, Y=0) beam profile (lower plot) at the output of the system when only the first and fourth input fibers are guiding beams at different power levels.

FIG. 31 is an experimentally measured near-field intensity distribution for the optical beam delivery system of FIG. 25, showing a two-dimensional (X, Y) intensity distribution (upper plot) and the corresponding one-dimensional (X, Y=0) beam profile (lower plot) at the output of the system when only the first and fourth input fibers are guiding beams at different power levels.

FIG. 32 is a block diagram of a delivery fiber and process head in accordance with one embodiment.

FIG. 33 is a set of experimentally measured far-field divergence distributions, in which the left- and right-side images show outputs of image relay fiber assemblies having, respectively, a single circular core as shown in FIG. 1, FIG. 2, and FIG. 5; and a non-circular core as shown in FIG. 34.

FIG. 34 is a side elevation view of an optical beam delivery system for generating a flat-top divergence distribution, according to one embodiment.

FIG. 35 is a side elevation view of an optical beam delivery system for generating a flat-top divergence distribution, according to one embodiment.

FIG. 36 is a side elevation view of an optical beam delivery system for generating a flat-top divergence distribution, according to one embodiment.

FIG. 37 is a side elevation view of an optical beam delivery system for generating a flat-top divergence distribution, according to one embodiment.

FIG. 38 is a side elevation view of an optical beam delivery system including a fiber assembly for generating a square far-field beam shape, and showing a free-space lens to image and magnify the fiber output so that the near-field beam has the intensity distribution present in the fiber core(s).

FIG. 39 are ray-tracking simulation (left side) and experimental (right side) results with top and bottom rows showing, respectfully, near- and far-field spatial profiles of an octagonal beam shape in the far-field.

DETAILED DESCRIPTION OF EMBODIMENTS

Introduction

As used in this application and in the claims, the singular forms "a," "an," and "the" include the plural forms unless the context clearly dictates otherwise. Additionally, the term "includes" means "comprises." Further, the term "coupled" does not exclude the presence of intermediate elements between the coupled items.

The systems, apparatuses, and methods described herein should not be construed as limiting in any way. Instead, the present disclosure is directed toward all novel and non-obvious features and aspects of the various disclosed embodiments, alone and in various combinations and sub--combinations with one another. The disclosed systems, methods, and apparatuses are not limited to any specific aspect or feature or combinations thereof, nor do the disclosed systems, methods, and apparatuses require that any one or more specific advantages be present, or problems be solved. Any theories of operation are to facilitate explanation, but the disclosed systems, methods, and apparatuses are not limited to such theories of operation.

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed systems, methods, and apparatuses can be used in conjunction with other systems, methods, and apparatuses. Additionally, the description sometimes uses terms like "produce" and "provide" to describe the disclosed methods. These terms are high-level abstractions of the actual operations that are performed. The actual operations that correspond to these terms will vary depending on the particular implementation and are readily discernible by skilled persons.

In some examples, values, procedures, or apparatuses are referred to as "lowest," "best," "minimum," or the like. It will be appreciated that such descriptions are intended to indicate that a selection among many used functional alternatives can be made, and such selections need not be better, smaller, or otherwise preferable to other selections. Examples are described with reference to directions indicated as "above," "below," "upper," "lower," and the like. These terms are used for convenient description, but do not imply any particular spatial orientation. Moreover, in the following examples, laser components and assemblies are described at a high level of abstraction and do not include a complete description of all mechanical, electrical, and optical elements necessary for operation.

As used herein, optical radiation refers to electromagnetic radiation at wavelengths of between about 100 nm and 10 $\mu$m, and typically between about 200 nm and 2 $\mu$m. Examples based on available laser diode and fiber laser sources and optical fibers generally are associated with wavelengths of between about 800 nm and 2,000 nm. In some examples, propagating optical radiation is referred to as one or more beams having diameters, asymmetric fast and slow axes, beam cross-sectional areas, and beam divergences that can depend on beam wavelength and the optical systems used for beam shaping. For convenience, optical radiation is referred to as light or beams in some examples and need not be at visible wavelengths. Forward-propagating light or optical beams or beam portions refer to light, beams, or beam portions that propagate in a direction of normal emission. Backward-propagating light or optical beams or beam portions refer to light, beams, or beam portions that propagate in an opposite direction of normal emission.

Component Overview

To understand the characteristics of embodiments described in the present disclosure, it is helpful to first understand the underlying components and physical phenomena exploited with the components. Accordingly, the following paragraphs summarize various designs and properties of optical fibers and lenses.

Optical fibers: An optical fiber is a thin, flexible strand of material (typically glass) that guides light within a core that is surrounded by a cladding. The core has a higher refractive index than the cladding, causing light to be guided by total internal reflection. The refractive index profile (RIP), i.e., the refractive index as a function of position transverse to the fiber axis, determines many of the important properties of the fiber. Many but not all fibers are cylindrically symmetric (i.e., the index is independent of azimuthal angle about the fiber axis). Optical fibers may have circular, square, rectangular, polygonal, oval, elliptical, or other cross-sections. In some embodiments, the core and claddings are approximately concentric. In other examples, one or more of the cores and claddings are decentered, and in some examples, core and cladding orientation and/or displacement vary along a waveguide length.

By generating and delivering a laser beam within an optical fiber, a fiber laser enables elimination of free-space optics, as well as their associated mounts, adjustment mechanisms, beam tubes, purge gas systems, etc. An important trend in the ongoing development of fiber lasers has been the incorporation of additional functionality into the optical fiber. An early example is fiber Bragg gratings, which are in-fiber mirrors used to build monolithic laser cavities without any free-space beams (among other applications). More recently, fiber-based components have been developed to enable combination of multiple fiber lasers for power scaling to the multi-kW level ("fused fiber combiners"), for polarization control, and for control or tuning of the beam size and shape. These all-fiber components can be spliced (fused) into the laser system to provide a sealed, stable, and alignment-free optical system. Replacement of some free-space components by fiber components confers some benefits, but development of monolithic, all-fiber systems is required to maximize the practical, reliability, and performance advantages of fiber lasers.

Optical fibers are typically formed of silica (glass), and dopants are added to increase or decrease the refractive index. Dopant concentrations are varied transversely to generate the desired RIP. In some examples, fibers or other waveguides are made of other materials such as fluorozirconates, fluoroaluminates, fluoride or phosphate glasses, chalcogenide glasses, or crystalline materials such as sapphire, depending on wavelengths and other properties of interest. Refractive indices of silica and fluoride glasses are typically about 1.5, and refractive indices of other materials such as chalcogenides can be 3 or more. In still other examples, optical fibers can be formed in part or completely of plastics (polymers).

In some examples, a doped waveguide core such as a fiber core provides optical gain in response to pumping. In the examples disclosed herein, a waveguide core such as an optical fiber core is doped with one or more rare-earth elements such as Nd, Yb, Ho, Er, Tm, or other active dopants or combinations thereof. Such actively doped cores can provide optical gain in response to optical pumping. As disclosed below, waveguides having such active dopants can be used to form optical amplifiers, or, if provided with suitable optical feedback such as reflective layers, mirrors, Bragg gratings, or other feedback mechanisms, such waveguides can generate laser emissions. Optical pump radiation can be arranged to co-propagate and/or counter-propagate in the waveguide with respect to a propagation direction of an emitted laser beam or an amplified beam.

A feeding fiber is an optical fiber assembly spliced to a laser and that has a connector on the distal output end. This connector is typically plugged into a socket on the input to the processing optics (e.g., a cutting or welding head, a scanner, etc.), which format the beam and deliver it to the workpiece being processed. Alternatively, the beam from the feeding fiber can be launched into a process fiber that has connectors on both ends. A process fiber is an optical fiber assembly connecting between the feeding fiber and the process optics.

A connection between the feeding fiber and process fiber may be made through a fiber-to-fiber coupler (FFC, a device with integrated free-space optics allowing for coupling between two optical fibers having the same or different dimensions) or a fiber-to-fiber switch (FFS, a device with integrated free-space optics allowing for programmed coupling between one input fiber and two or more output optical fibers having the same or different dimensions).

Step-index fibers: The most common RIP is known as "step index," in which the core has a uniform index and is surrounded by the cladding with a uniform (lower) index. In a step-index fiber, light launched into the fiber core in a given location tends to spread radially and azimuthally to fill the core, i.e., the core does not preserve spatial information about the location of the launched beam. It is known that light rays launched at a particular angle with respect to the fiber axis tend to exit the fiber core at the same angle (in a cone because of azimuthal scrambling), i.e., step-index fibers typically preserve angular information. In particular, the preservation of the launch angle at the output of the step-index fiber (i.e., the far-field divergence profile) is a property leveraged by embodiments of this disclosure. (Note that the terms far- and near-field intensity distribution mean, respectively, an angular intensity distribution (with respect to the optical axis) and a transverse spatial intensity distribution.) Various effects can cause imperfect preservation of the launch angle (e.g., causing higher divergence for the output than the input rays), and multiple studies have investigated methods to minimize this effect.

GRIN fibers: Some fibers have a non-uniform RIP in the core and (less often) in the cladding. A common, non-uniform core RIP is known as "graded index" or "GRIN," in which the index value decreases monotonically from the center of the core to the cladding. In many cases, the GRIN profile is parabolic. A parabolic GRIN fiber with an appropriate length can act as a lens that focuses or collimates a beam. This property is also used in free-space GRIN lenses, i.e., it is not limited to fibers. The size of a beam coupled into a parabolic GRIN fiber may oscillate periodically as the beam propagates along the fiber, with the oscillation period known as the "pitch" of the fiber. A GRIN pitch is the physical length of the GRIN fiber in which an input ray completes one oscillation period within the fiber. The length of the fiber corresponding to one sine wave period is defined in Equation 1: $p = \dfrac{2\pi}{\sqrt{k}}$ , where k is the gradient constant determined by the RIP of the GRIN fiber.

The radially symmetric RIP of the GRIN fibers can be described by this Equation 2:

$$n\left(r\right) = n_0\left(1 - \left(\frac{k}{2}\right)r^\alpha\right)$$ , where $n_0$ is the index of refraction at the center of the fiber, $k$ is a constant, and

$\alpha$ is approximately 2.0, as defined in W. J. Smith, Modern Optical Engineering, Third Edition, McGraw-Hill, Inc. (2000), p. 286. This formula represents a simplified (approximate) ideal case for the RIP. Fabricated GRIN fibers using various methods can vary somewhat from the ideal profile while maintaining acceptable performance.

Multi-clad fibers: Another example of a non-uniform RIP is a fiber with multiple claddings ("double-clad fiber," "triple-clad fiber," etc.). As with other non-uniform RIPs, propagation of light in a multi-clad fiber depends on the specific RIP and the launch or coupling conditions. Light launched into a given region will spread into all adjacent higher-index regions, but it may not spread into all adjacent lower-index regions (which act as a cladding for the higher-index region).

One fiber design, herein called a ring fiber, has multiple cores or guiding regions. Specifically, a ring fiber has one or more annular cores concentrically surrounding a central (non-annular) core, with low-index glass layers separating the cores so that light coupled into a given core will be guided within that core. The central core is surrounded by a low-index (non-guiding) annulus (cladding), and the ring-shaped guiding regions are bounded by low-index annuluses on the inner and outer perimeters.

Multi-core fibers: Some fibers have multiple cores, i.e., multiple high-index guiding regions separated by surrounding low-index regions. The cores can have different sizes and shapes. A ring fiber, described above, is an example of a multi-core fiber. Light launched into a given core of a multi-core fiber will typically spread out to fill that core (as in a fiber with a single core) but will not spread into the other cores because the surrounding low-index region (cladding) prevents propagation between the cores. Multi-core fibers can be used to generate different beam shapes (i.e., near-field spatial profiles) by coupling different powers into each core. In comparison to standard fibers (especially step-index fibers), multi-core fibers have several disadvantages: (1) Multi-core fibers are generally more expensive than standard fibers. (2) The low-index regions separating the guiding regions generate highly divergent light if a portion of the beam is coupled into them. The downstream optics must be designed to accommodate this excess divergence, which typically adds cost, complexity, and/or optical loss (reduced efficiency). If not properly managed, the excess divergence can cause overheating or damage of the optics or other components. (3) The dimensions of the guiding regions are fixed when the fiber is manufactured. The beam dimensions thus cannot be continuously varied (although the power in each region can be continuously varied). Furthermore, if an application prefers different dimensions (e.g., a larger diameter ring), a new multi-core fiber must be fabricated, which can lead to a proliferation of product designs (which complicates and adds cost to manufacturing). (4) Splicing of multi-core fibers is complicated by the need to align multiple guiding regions, which each have fabrication tolerances. Achieving the desired splicing performance can require excessively tight fiber tolerances (increasing cost), low splice yields, and/or performance degradation upon splicing (e.g., from coupling light into the low-index regions, resulting in increased divergence).

Note that the above discussion of the different types of optical fibers primarily pertains to multimode fibers, in which the ray picture of light propagation is accurate. Single-mode or near-single-mode fibers introduce other phenomena that are less relevant to the embodiments described in this disclosure.

Lenses: Lenses are ubiquitous in optical systems. A lens is conventionally thought of as a piece of glass with one or both surfaces curved, and the angle of propagation of a light ray is influenced by refraction at the surfaces. Other implementations of lenses are possible, including a GRIN lens (as mentioned above) in which the RIP of the material varies with radial position (rather than employing curved surfaces). The end of a fiber or of an end cap attached to a fiber can have a curved surface to function as a lens. A design property of a lens is its focal length. A collimated input beam is focused to a point one focal length away from the lens (in the ray picture). Similarly, a point source located one focal length away from a lens is collimated at the lens output. Stated more generally, a lens maps between position and angle, i.e., a lens converts the angle of a ray at the input focal plane to position at the output focal plane, and it converts the input position of a ray at the input focal plane to angle at the output focal plane.

Image Relay for Structured Laser Beam Profile

Some industrial lasers with composite beam profiles (i.e., beams generated by coupling power into two or more guiding regions of a multi-core fiber) and/or variable beam profiles (i.e., beams having a variable transverse spatial intensity distribution) use ring fibers as feeding fibers. In systems incorporating an FFC or FFS, the process fiber is intended to preserve at least some aspects of the beam shape from the feeding fiber. For example, if the feeding fiber comprises a central core and a surrounding ring, the process fiber often also has a central core and surrounding ring (although perhaps of different dimensions than those of the feeding fiber), and light propagating in the core and ring of the feeding fiber are coupled into the core and ring of the process fiber, respectively. The FFC/FFS optics may be designed to largely preserve the sizes of the guiding regions when imaging the beam onto the input of the process fiber (magnification ~1), or they may magnify or demagnify the beam (with a corresponding change in divergence). The process fiber RIP is designed to accommodate the shape and divergence characteristics of the beam from the feeding fiber, any changes imparted by the FFC/FFS optics, and any imperfections associated with fiber tolerances and the optical performance and alignment of the FFC/FFS optics. Ring fibers with multiple NA and dimensional tolerances can be difficult to produce, and tolerance stack-up and system imperfections (e.g., misalignment) may undesirably change the beam characteristics at the output of the process fiber. For example, when there is an FFC or FFS at an output of a first ring fiber (feeding fiber), and a ring beam is desired at the output of the system (FFC/FFS and process fiber), a second ring fiber (process fiber) can sometimes be misaligned with respect to the beam from the first ring fiber resulting in clipping on a low-index (e.g., fluorosilicate) annulus of the second ring fiber, which can undesirably increase the divergence or NA of the beam emerging from the second ring fiber. This increased NA of the output laser beam inhibits the use of some conventional process optics, thus significantly reducing the number of potential applications of such beams. In some cases, an aperture may be used to reduce the NA of the output beam. However, this approach reduces the output power of the beam, which is not desirable for certain applications. In addition, light may be coupled from one core of the feeding fiber to a different core of the process fiber (e.g., from the central core to the ring, or vice versa), which undesirably changes the beam shape.

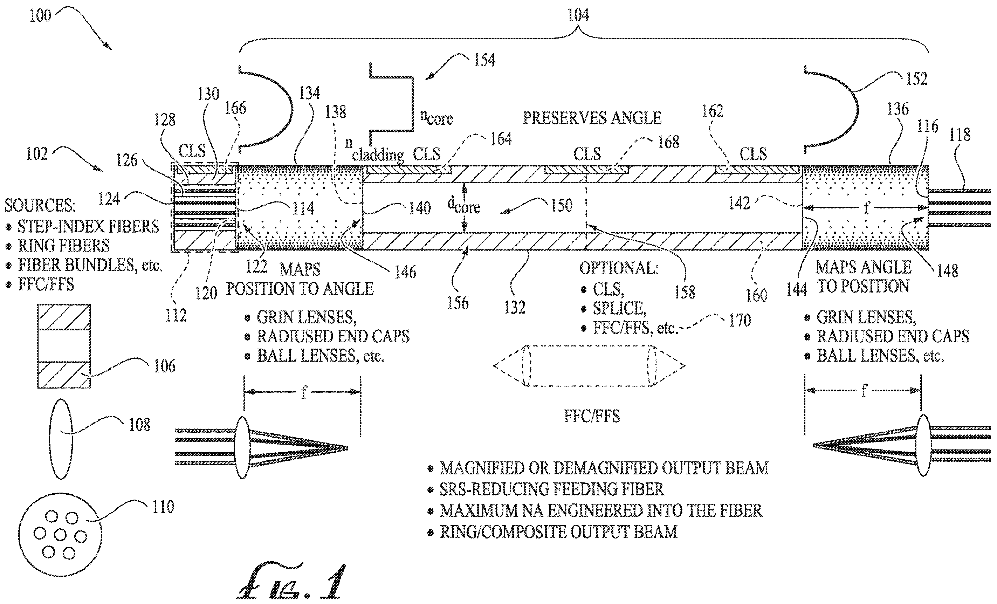

FIG. 1 shows an optical beam delivery system 100 including a laser source 102 and a fiber assembly 104. FIG. 1 shows different options of laser sources 102, including a step-index fiber 106, free space optics 108 (e.g., an FFC or an FFS), a fiber bundle 110, or ring fiber 112. When fiber assembly 104 is fiber coupled to a source fiber, fiber assembly 104 acts as the feeding fiber (i.e., it is attached to the source). When a beam is launched from free space into fiber assembly 104, it acts like a process fiber (i.e., detachable from the optics). Of course, fiber assembly 104 can also be fiber coupled to a conventional fiber at the output of an FFC/FFS, which would make fiber assembly 104 part of a process fiber. The term fiber coupled includes a direct physical connection as well as connections that are slightly spaced apart, i.e., at or within one Rayleigh range, which is the distance along the propagation direction of a beam from the waist to the location where the area of the cross section is doubled.

In an example of FIG. 1, laser source 102 is a ring fiber 112 coupled to an image relay fiber input 114, and fiber assembly 104 provides at its image relay fiber output 116 an output optical beam 118 having an image of the output of laser source 102 (i.e., maintaining the beam shape of laser source 102, optionally including magnification or demagnification).

As noted previously, ring fiber 112 may be a component of a VBC laser (perturbation device and other fiber components not shown) providing at its output 120 an input optical beam 122 having a variable structured near-field profile, e.g., a transverse spatial intensity distribution in the form of an adjustable saddle or ring mode (as well as other beam shapes) that is generally azimuthally symmetrical about an optical axis. To provide the variable beam, ring fiber 112 includes a centrally located core 124, a first coaxial anti-guiding (cladding) region 126, and a first annular core 128. Ring fiber 112 also includes a second coaxial anti-guiding (cladding) region 130, which may include an optional CLS. Additional details of VBC fibers are described in the '768 patent. Input optical beam 122 may be provided by a ring fiber 112, but a ring fiber is not required. In other embodiments, laser source 102 may provide a static, non-tunable beam.

Fiber assembly 104 includes a divergence-preserving fiber 132 (also called an angular- or divergence-distribution preserving fiber) or multiple such fibers in sequence. Divergence-preserving fiber 132 is spliced between the following GRIN fiber lenses on either side: a first GRIN fiber 134 and a second GRIN fiber 136. An output 138 of first GRIN fiber 134 is coupled to an input 140 of divergence-preserving fiber 132. An output 142 of divergence-preserving fiber 132 is coupled to an input 144 of second GRIN fiber 136. Note that segments or sections of fiber assembly 104 may include different combinations of portions to achieve the desired function. For instance, as explained in more detail below, divergence-preserving fiber 132 may include a splice with different portions (i.e., different RIPs or dimensions) on either side of the splice.

The spatial distribution of input optical beam 122 applied to image relay fiber input 114 is converted to a divergence distribution by first GRIN fiber 134 (due to lens properties and designs explained below) to form an intermediate beam 146 provided at input 140 of divergence-preserving fiber 132. Divergence-preserving fiber 132 transports intermediate beam 146 (with the divergence distribution largely preserved) to output 142 where it is applied to input 144 of second GRIN fiber 136. Second GRIN fiber 136 then converts the angular distribution of intermediate beam 146 to a spatial distribution, effectively refocusing it to form refocused beam 148 provided at image relay fiber output 116. Refocused beam 148 is an azimuthally scrambled image of input optical beam 122, and so fiber assembly 104 is referred to in this disclosure as an image relay fiber. Thus, refocused beam 148 is formed from injecting input optical beam 122, which has a known or knowable near-field and far-field distribution, into a step-index core 150. At that point, the angular distribution relative to the optical axis of step-index core 150 is preserved whereas the spatial distribution and azimuthal angular distribution will be scrambled as it propagates.

If first GRIN fiber 134 and second GRIN fiber 136 each have a length equal to $(\frac{1}{4} + \frac{1}{2} n)$ pitch (where n equals zero or any positive integer), then fiber assembly 104 acts in a similar manner to a relay imaging telescope (with azimuthal scrambling of the input beam), thus forming an (azimuthally scrambled) image of input optical beam 122 at output optical beam 118. If first GRIN fiber 134 and second GRIN fiber 136 have the same effective focal length (see, e.g., "f" annotating second GRIN fiber 136), then the output spatial profile will be an inverted, azimuthally scrambled image of the input spatial profile. If the spatial profile of input optical beam 122 is azimuthally symmetric, then the spatial profile of output optical beam 118 will be an inverted image of the input beam (similar to the function of a free-space optical telescope). In other embodiments, the beam profile at image relay fiber output 116 may also be imaged as a magnified or demagnified version of the input by using, respectively, a lower or higher effective focal length for second GRIN fiber 136. For example, an input GRIN having a gradient constant of 2.0 and output GRIN having a gradient constant of 0.5 results in an approximately $2\times$ magnification of the near-field beam diameter. Likewise, an input GRIN having a gradient constant of 0.5 and output GRIN having a gradient constant of 2.0 results in an approximately $0.5\times$ magnification of the near-field beam diameter. Gradient constants ranging between 0.1 and 50 are also possible, depending on the application.

For divergence-preserving fiber 132, a cladding diameter to core diameter ratio of two or higher reduces mode coupling in the fiber, leading to better preservation of the angular distribution along the length of the fiber. In some embodiments, diameters of cores (not shown) of first GRIN fiber 134 and second GRIN fiber 136 are selected to match that of step-index core 150 of divergence-preserving fiber 132. In other embodiments, however, the divergence-preserving fiber core diameter and the GRIN core diameters need not match. For example, imaging is improved (lower aberrations) in some embodiments where step-index core 150 is smaller than that of the output GRIN core.

First GRIN fiber 134 and second GRIN fiber 136 may have different core diameters while still maintaining the same gradient constant. For instance, a larger diameter GRIN may be used for the output in some embodiments. In other embodiments, the two GRIN fibers may have the same NA when both the gradient constant and core diameters are the same.

In one embodiment, the lengths of both first GRIN fiber 134 and second GRIN fiber 136 are each equal to ¼ of the pitch of the GRIN lens. Both first GRIN fiber 134 and second GRIN fiber 136 could also include any ½ integer multiples of the ¼ pitch, i.e., a length of $(0.25 + 0.5*n)$ pitch, where n equals zero or any positive integer (0, 1, 2, ...).

FIG. 1 also shows examples of RIPs of first GRIN fiber 134, divergence-preserving fiber 132, and second GRIN fiber 136. For example, first GRIN fiber 134 and second GRIN fiber 136 each have a parabolic RIP 152 that may be similar for each fiber subject to typical manufacturing tolerances and imaging design optimizations. Divergence-preserving fiber 132 includes a step-index RIP 154 formed by a high-index step-index core 150 surrounded by a cladding 156. In other embodiments (not shown), divergence-preserving fiber 132 includes a step-index RIP formed by a high-index core surrounded by a down-doped anti-guiding annular region and an outer cladding region.

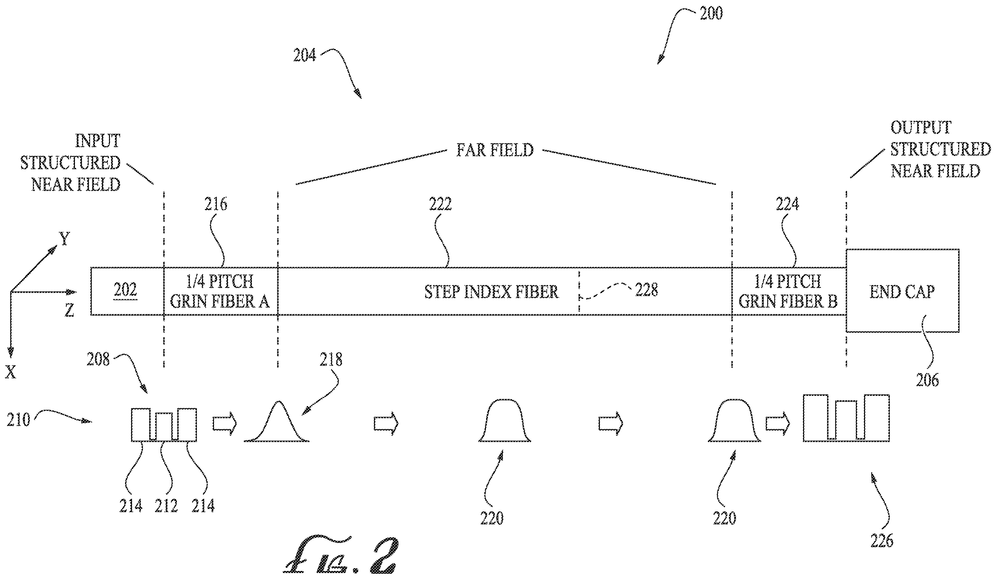

As indicated in the fragmentary view of FIG. 1, an optional splice 158 is included in divergence-preserving fiber 132. Including a splice in divergence-preserving fiber 132 is advantageous for manufacturing and for field service. For instance, it is common to build up subassemblies that are spliced together to form optical beam delivery system 100. Different products or configurations may correspond to different sets of subassemblies, i.e., different output beam sizes and divergences are provided by different combinations of laser source 102 and fiber assembly 104 (first GRIN fiber 134, divergence-preserving fiber 132, and second GRIN fiber 136). Including optional splice 158 in the fiber allows different output beam parameters to be generated by choosing a different output "pigtail" (i.e., a divergence-preserving fiber 160 and second GRIN fiber 136). An example of a magnification pigtail is described later with reference to FIG. 2. More generally, a large number of possible combinations is enabled with a minimal number of subassemblies.

Optional splice 158 also enables relatively inexpensive rework and minimizes yield loss. For example, if the pigtail (i.e., divergence-preserving fiber 160 and second GRIN fiber 136) is damaged, only the pigtail has to be replaced, rather than replacing an entire fiber assembly 104. Similarly, including optional splice 158 is also advantageous for service (in the field or at a depot). It is relatively common to burn the face of the end cap on the feeding fiber. As noted above, the cost and complexity of the part that has to be replaced is minimized by including optional splice 158 in divergence-preserving fiber 132, such that the FRU is the pigtail. And if a customer or end-user wanted to change the configuration of their laser (different spot size, divergence, or both), then the FRU could be changed at the customer or end-user site relatively easily and inexpensively.

In addition, optional splice 158 facilitates stepping up or down the core diameter, which enables accommodation of splicing and fiber tolerances to simplify the splicing process and increase the yield. A step up means a core diameter of divergence-preserving fiber 160 is larger than that of divergence-preserving fiber 132. A step down means a core diameter of divergence-preserving fiber 160 is smaller than that of divergence-preserving fiber 132. The fiber core diameter can have some variation between batches and within a batch. If this variation causes a step down at the splice, there may be optical loss or divergence increase (from coupling of light from the core into the cladding at the splice). Similarly, splicers have alignment tolerances that can cause imperfect alignment of the fiber cores at the splice, which can again result in optical loss or divergence increase. Including a step up in the core diameter at optional splice 158 minimizes or eliminates these problems, ensuring that the splice has a high yield and minimizing degradation of the optical performance or reliability from the splice. For example, a step up of about 2-10 $\mu$m is typical for some applications, but a larger step up is possible and may be desirable (depending on the desired output beam characteristics).

In another embodiment, the cladding diameter may be stepped up or down at optional splice 158, in addition to or separate from any change in the core diameter. A step up means an outside diameter of divergence-preserving fiber 160 is larger than that of divergence-preserving fiber 132. A step down means an outside diameter of divergence-preserving fiber 160 is smaller than that of divergence-preserving fiber 132. The inside diameters would depend on core sizes, which as explained above, may also be adjusted at optional splice 158. For instance, a step down of the cladding could be desirable for reliability because it ensures that back-reflected light (e.g., from the workpiece) remains in the cladding and is not lost at optional splice 158 or coupled into the polymer (i.e., fiber buffer or potting around optional splice 158, not shown), which can cause damage.

In some embodiments, light launched into cladding 156 of divergence-preserving fiber 132 is removed by an optional CLS 162. This approach allows for removal of high-NA light in optical beam delivery system 100 rather than in downstream optics (e.g., a process head, collimator, or scanner). In some embodiments, an optional CLS 164 is included at input 140 of divergence-preserving fiber 132. Another option is to include a CLS 166 at an output of laser source 102. And yet another option is to include a CLS 168 on one or both sides of optional splice 158 or an optional FFC/FFS 170. The various CLS options may be combined, depending on the presence of cladding light at different locations.

Optional FFC/FFS 170 may be positioned along divergence-preserving fiber 132 (e.g., two step-index fibers separated by the coupler or switch). The two divergence-preserving fibers at the input and output of the FFC/FFS may have the same or different core and cladding diameters. The output characteristics of the beam delivered in this configuration may be controlled by selection of the FRU, i.e., by the design of the fiber assembly downstream of the FFC/FFS (specifically the core diameter of the divergence-preserving fiber and the focal length of the GRIN lens); this fiber assembly may serve as the process fiber. The embodiment with the FFC/FFS enables delivery of a shaped beam (e.g., from a multi-core fiber or from other sources described below) without the need to image this beam shape onto the process fiber input and without requiring a multi-core process fiber, which offers significant advantages for fiber fabrication tolerances, beam alignment tolerances, performance of the free-space optics in the FFC/FFS, and preventing generation of a high-NA tail in the output beam from the process fiber. Furthermore, the fiber assembly comprising the process fiber (i.e., divergence-preserving fiber + GRIN lens + optional end cap) can include a splice that steps up or down the core and/or cladding diameters, which has some of the advantages discussed above in the context of a splice in the feeding fiber.

As explained above, first GRIN fiber 134 maps position to angle. Likewise, second GRIN fiber 136 maps angle to position. These two fibers thereby form with divergence-preserving fiber 132 a monolithic fiber assembly that has various use cases described in more detail below. Other options for lenses used in other monolithic fiber assemblies are shown in FIG. 1 as radiused end caps, ball lenses, and the like. FIG. 1 also shows that free space optics may be used as an alternative to a monolithic fiber assembly.

FIG. 2 shows another embodiment of an optical beam delivery system 200 including a source fiber 202 and an image relay fiber assembly 204 that may be spliced directly to source fiber 202, as described previously. Image relay fiber assembly 204 includes similar components to those shown in fiber assembly 104 and also includes an end cap 206. In both embodiments, the ¼ pitch GRIN fiber may be directly spliced to end cap 206. The purpose of end cap 206 is to increase the power handling capability of the feeding fiber or the process fiber (by allowing the beam to expand before it encounters the glass/air interface), and the end cap output face may be anti-reflection coated. Input near-field beam profile 208 shown in FIG. 2 may be provided by a ring fiber.

FIG. 2 also shows example beam intensity profiles 210 at various Z-axis locations along an optical axis of image relay fiber assembly 204. Each one of beam intensity profiles 210 shows intensity as a function of X position at selected Z-axis locations.

An input near-field beam profile 208 includes a structured near-field intensity profile having centrally located optical power 212 in a centrally located core (see e.g., centrally located core 124, FIG. 1) surrounded by an anti-guiding annular region, i.e., a cladding (see e.g., first coaxial anti-guiding region 126, FIG. 1). Annularly located optical power 214 is provided in an annular core (see e.g., first annular core 128, FIG. 1). Because annularly located optical power 214 is higher in intensity than centrally located optical power 212, input near-field beam profile 208 is a so-called saddle mode. Skilled persons will appreciate in light of this disclosure, however, that a saddle or ring beam is shown by way of example. Other input beam profiles, including beams from a single core and other multi-core fibers, are also possible. Moreover, beam shapes generated by VBC systems of the '768 patent may be used for beam intensity profiles 210. If the fiber assembly is designed to magnify the beam, it can provide divergence reduction.

As described previously, input near-field beam profile 208 is converted by a first GRIN fiber 216 to an intermediate profile 218 (shown as a Gaussian shape, which would be the case if the input angular distribution to first GRIN fiber 216 were Gaussian). Intermediate profile 218 may evolve spatially into other intermediate profiles 220 as it propagates through a divergence-preserving fiber 222 (e.g., by spreading to fill the core and/or by azimuthally scrambling), but the divergence distribution is largely preserved. Intermediate profile 220 is coupled to a second GRIN fiber 224, which refocuses intermediate profile 220 to form an output beam profile 226. In the present example, output beam profile 226 is a magnified version of input near-field beam profile 208, although magnification is optional in other embodiments. Furthermore, input near-field beam profile 208 may be static or variable, depending on the input beam.

As described previously, a portion downstream of a splice 228 may be used as a field-replaceable part. For example, in some VBC systems, an end cap of a ring fiber may become damaged. If the ring fiber comprises the feeding fiber (i.e., is spliced to the laser output) and is directly coupled to process optics (i.e., there is no replaceable process fiber), then damage to the end cap of the ring fiber may require the entire VBC system to be replaced due to the difficulty in precisely aligning and splicing together two ring fibers without undesirably changing or degrading the beam properties. Accordingly, image relay fiber assembly 204 with splice 228 in divergence-preserving fiber 222 facilitates splicing a step-index fiber, which could be performed as a field operation, and the beam properties will not be significantly altered. Furthermore, a CLS (not shown) may be included in divergence-preserving fiber 222. Skilled persons will appreciate that the optional splice, CLS, or both features may be included in any other embodiments described in this disclosure. Similarly, as described previously, including an FFC or FFS along divergence-preserving fiber 222 would enable field replacement of the process fiber (downstream from the FFC or FFS), which again could be performed as a field operation.

Tailored beam shapes have been shown to improve cutting and welding performance. Image relay fiber assemblies utilizing graded index (GRIN) fibers (see, e.g., FIG. 1 and FIG. 2) have been shown to tailor the output near-field and far-field beam intensity distributions to specific laser processing applications. For example, a 2.1$\times$ GRIN relay assembly (i.e., an input GRIN, a step-index fiber, and an output GRIN) has been shown to increase maximum cutting speed of one inch mild steel, with both inert and fusion cutting methods, compared to a conventional 100 $\mu$m laser. Notably, due to mode mixing in the step fiber between the two GRIN fibers, there is an increase in the laser output beam parameter product (BPP), which can impact cutting performance for some metal thicknesses and may be less optimal in non-cutting applications (e.g., remote welding). In some embodiments, a CLS in the image clips of a portion of the high divergence input beam to maintain a reasonably low BPP, which results in a loss of power, typically around 1-3%.

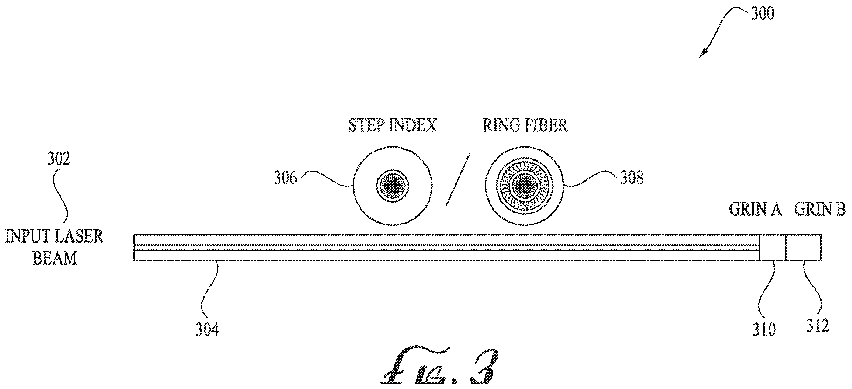

FIG. 3 shows another optical beam delivery system 300 that avoids the aforementioned power loss while maintaining BPP, achieving magnification or demagnification of the input beam, and introducing no significant change to the shape of the intensity distribution. In the previous embodiments, an intermediate step-index fiber facilitates azimuthal scrambling. For some other applications, however, (e.g., such as when an input beam is already azimuthally symmetrical) optical beam delivery system 300 employs an input beam 302 provided from a source fiber 304 (e.g., a step-index fiber 306 or a ring fiber 308) to a first GRIN lens 310 that is coupled directly to a second GRIN lens 312, i.e., back-to-back lenses. Input beam 302 could also be from a VBC fiber.

First and second GRIN fibers 310 and 312 are akin to those described previous with reference to FIG. 1 and FIG. 2, which act to magnify or demagnify a near-field intensity distribution of input beam 302 while preserving the input beam BPP at the output of second GRIN lens 312. For instance, first GRIN lens 310 and second GRIN lens 312 are both a 0.25 + 0.5*n pitch length. With different effective focal lengths (EFLs) (e.g., a range of EFLs from about 0.1 mm to about 2.0 mm) for the GRIN fibers, the input beam to first GRIN lens 310 is magnified or demagnified with minimal change to the shape of the input intensity distribution. For a magnification of the near-field intensity distribution, the effective focal length of second GRIN lens 312 is greater than that of first GRIN lens 310. For demagnification of the near-field intensity distribution, the effective focal length of first GRIN lens 310 is greater than that of second GRIN lens 312. Magnification ranges of less than about $0.5\times$ and greater than about $3.0\times$ can also be achieved.

Such in-fiber scaling is advantageous because, for example in the case of in-fiber magnification, it may be used a substitute for a relatively large magnifying cutting head, in which case a smaller cutting head may be used. The smaller cutting head is advantageous because it necessarily has less mass and exerts less mechanical force when rapidly accelerated and stopped while be moved during laser processing. In another example, thin metal cutting and metal piercing are applications that benefit from smaller near-field spot sizes achieved from demagnification.

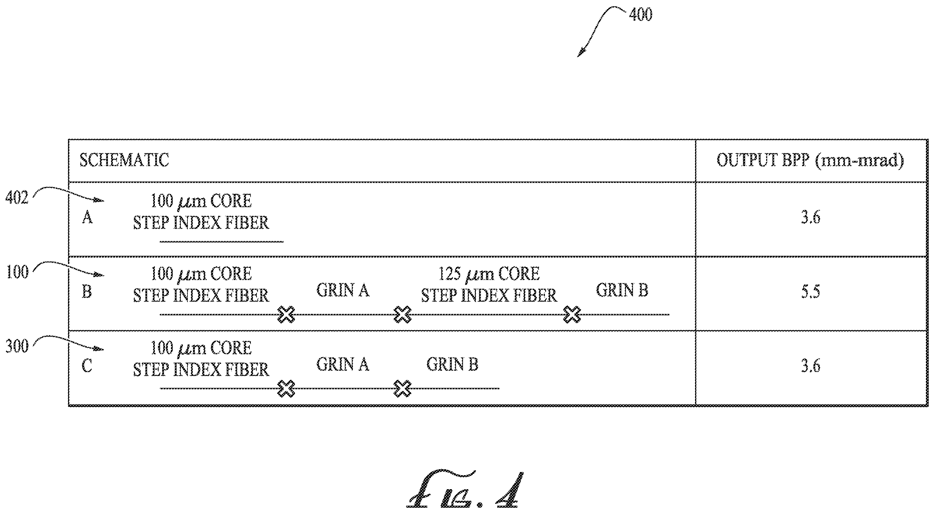

FIG. 4 shows a table 400 of experimentally measured output BPP values of a $2.1\times$ magnification configuration for each of a step-index fiber 402, optical beam delivery system 100, and optical beam delivery system 300. For optical beam delivery system 100, the BPP increases by about $1.5\times$ (from 3.6 to 5.5), whereas optical beam delivery system 300 conserves the 3.6 BPP from the input source.

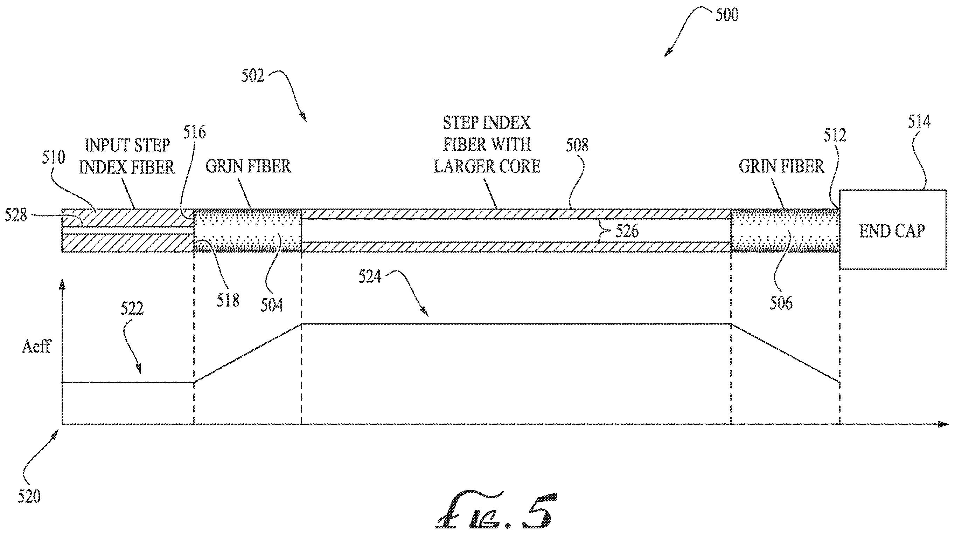

In some embodiments, optical beam delivery system 100 produces a flat-top divergence distribution, which is useful for some applications. In contrast, optical beam delivery system 300 maintains the original shape of the divergence distribution (scaled up or down). Optical beam delivery system 100 also has lower SRS generation due to its 125 $\mu$m core, as described below with reference to FIG. 5.

SRS Reduction

High-power industrial fiber lasers and fiber-coupled lasers are susceptible to nonlinear optical effects occurring in the fiber, such as SRS, stimulated Brillouin scattering (SBS), four-wave mixing (FWM), self-phase modulation (SPM), and thermal mode instability (TMI). These nonlinear optical effects can adversely impact the performance of the laser system by reducing the laser signal power, broadening the laser linewidth, or inducing fluctuations in the power or the near-field beam profile and/or the divergence profile. For example, SRS (often the most deleterious nonlinear optical effect in high-power industrial fiber lasers) shifts a portion of the light beam to longer wavelengths, which are often not useful for the process or can even be deleterious to the process or the optics.

The fraction of the power that is converted to SRS wavelengths increases with increasing power and fiber length and decreasing core diameter, effectively limiting the value of power×length/diameter. To avoid excessive SRS power at a given laser power, either the delivery fiber length has to be limited (which can create practical problems for the tool design), or the core diameter has to be increased (which can result in reduced processing performance because of the lower power density or brightness). SRS becomes increasingly problematic in industrial fiber and fiber-coupled laser systems that employ high powers (multiple kW), small beams (often less than or equal to 100 microns), and/or long distances between the laser and the process optics (typically greater than 10 m, but sometimes less than 10 m). For industrial laser applications of high-power lasers, it is sometimes desirable to use a long feeding or process fiber having a relatively small core. Because optical fibers have small core diameters, nonlinear optical processes limit the ability of the fiber to transmit light over long distances. For example, a large laser cutting tool may employ a feeding fiber length of 20 meters or longer. A 20 kW laser having a 100 $\mu$m core feeding fiber, however, may produce substantial SRS.

A critical SRS threshold is defined as the input power at which the SRS signal power is equal to the laser signal power at the fiber output. As described by G. Agrawal in Nonlinear Fiber Optics (6th edition, p. 301), the critical threshold power for generating SRS in fiber lasers is proportional to the ratio of the effective mode area ($A_{eff}$) and the effective fiber length ($L_{eff}$), as shown in Equation 3:

$$P_0^{cr} \propto \frac{A_{eff}}{L_{eff}}$$

$A_{eff}$ is found from transverse spatial integrals involving the beam intensity distribution and is equivalent to the area of a top-hat beam that results in the same SRS power as the actual beam profile. $L_{eff}$ is based on the length of fiber in which the SRS process is generated, including the effects of beam amplification, absorption, and scattering. The parameters $A_{eff}$ and $L_{eff}$ are directly related to the core diameter and the length of the fiber, respectively. Thus, the threshold power for SRS generation increases with larger effective mode area (core size) and decreases with longer fiber length.

This threshold definition is higher than what is acceptable in most industrial fiber laser applications. A maximum allowable SRS content may be 10% or less, or 1% or less in some applications. Specific applications have other critical SRS thresholds (i.e., maximum allowed SRS fractional powers), for example, 0.1, 0.01, or even lower. Independent of the numerical value of the SRS threshold, the threshold scales with $A_{eff}$ and $L_{eff}$ as indicated in Equation 3. In practice, the SRS fraction is typically measured experimentally with a spectrometer or with optical filters. SRS is of particular concern in high-power CW fiber lasers used in industrial applications, where it poses practical design limits for certain combinations of output power, fiber length, and core diameter (near-field beam size). Similarly, for pulsed lasers with high peak intensities, SRS often limits the peak power, fiber length, or core size.

Fiber tapers have been used to increase the attainable laser power or delivery fiber length prior to the onset of excessive SRS. In contrast to most fibers having a constant diameter along the fiber axis, in fiber tapers, the fiber diameter tapers up or down to increase or decrease the diameter, respectively. When the fiber core diameter is increased, the diameter of the beam propagating in the core also increases, and there is a corresponding decrease in the beam divergence. Similarly, a down-taper will decrease the beam diameter and correspondingly increase the beam divergence. If the taper is "adiabatic" (i.e., sufficiently gradual and without imperfections), the product of the beam diameter and divergence (known as the "brightness") will be preserved; for a non-adiabatic taper, the brightness will be decreased. If the delivery fiber is up-tapered at its input end (near the laser source) and down-tapered at its output end (near the process optics), and if the tapers are adiabatic (or nearly so), the beam diameter and brightness at the fiber output are preserved (or nearly preserved) even though the beam diameter is increased through much of the fiber. This increased beam diameter decreases the value power×length/diameter, enabling one or both of a higher power and longer fiber length before the onset of excessive SRS, in accord with Equation 3. The disadvantages of this approach are that the tapers can be difficult to manufacture (adding cost and/or degrading reliability), and the larger fiber diameter has a larger minimum bend radius (which can be a practical problem).

Without using tapers, FIG. 5 shows an optical beam delivery system 500 that increases $A_{eff}$ (thereby increasing the threshold for SRS compared to a conventional delivery fiber) by replacing a typical feeding fiber having an input effective mode area with a fiber assembly 502 providing through its length a larger core size having a larger effective mode area. This approach allows for longer length feeding fibers or smaller output beam diameters before nonlinear effects are problematic, which is useful in a feeding fiber or a process fiber in either pulsed or CW lasers. For instance, when fiber assembly 502 is spliced to a source fiber, it acts as a feeding fiber (i.e., it is attached to the source) for increasing the threshold for SRS. When a beam is launched from free space into fiber assembly 502, it acts like a process fiber (i.e., detachable from the optics) for increasing the threshold for SRS. Of course, fiber assembly 502 can also be spliced to a conventional fiber at the output of an FFC/FFS to increase the SRS threshold, which would make fiber assembly 502 part of a process fiber. In any of these scenarios, this approach is suitable for applications with high peak or average powers, long feeding or process fibers, and/or small core diameters.

Fiber assembly 502 includes a first GRIN fiber 504, a second GRIN fiber 506, and a divergence-preserving fiber 508 spliced between first GRIN fiber 504 and second GRIN fiber 506. Accordingly, fiber assembly 502 has a structure similar to that of fiber assembly 104 (FIG. 1) and image relay fiber assembly 204 (FIG. 2). The combination of fibers in fiber assembly 502 replicates an input beam diameter from a source fiber 510 at an output 512 of second GRIN fiber 506, which may be connected to an end cap 514. In contrast to a ring fiber as a source fiber as described previously, however, optical beam delivery system 500 includes a single-core (e.g., step-index) source fiber 510 with its output 516 spliced (or free-space coupled to) an input 518 of first GRIN fiber 504. In other embodiments, a ring fiber or other multi-core fiber may be used as source fiber 510.

Each of first GRIN fiber 504 and second GRIN fiber 506 is cleaved and spliced at a ¼ pitch (e.g., typically less than 10 mm), and each may be optimized for imaging (power law profile with alpha parameter of about 2.0, where alpha is shown as the value 2 in the exponent of Equation 2). Each GRIN fiber length may also have a pitch of ½ n + ¼, where n equals zero or any positive integer (0, 1, 2, ...).

Divergence-preserving fiber 508 has a larger core diameter compared to that of source fiber 510, thereby increasing the effective mode area. Thus, the embodiment of FIG. 5 acts to increase an SRS threshold compared to conventional delivery fibers. A 200 $\mu$m core diameter, for example, may be a suitable size for divergence-preserving fiber 508 (FIG. 5) with 50 $\mu$m diameter of source fiber 510.

Other core diameters for the input fiber and divergence-preserving fiber are also possible. As mentioned above, a cladding diameter to core diameter ratio of two or higher for the step-index fiber is employed in some embodiments. $A_{eff}$ and thus the SRS threshold power scales as the square of the core diameter, so the ratio of the core diameter of the divergence-preserving fiber to that of the input fiber may be 1.4 or larger to achieve at least a 2× increase in the SRS threshold power for a comparable length feeding fiber. Other design optimization in the size of cladding and core are also possible.

Along the length of divergence-preserving fiber 508 (which accounts for the majority of a typical feeding fiber or process fiber length), the effective mode area is increased compared to a conventional output fiber. As shown in graph 520, first GRIN fiber 504 transitions from a first (input) effective mode area 522 of source fiber 510 to a second effective mode area 524 of divergence-preserving fiber 508. Divergence-preserving fiber 508 has a core diameter 526 (e.g., a range from about 50 $\mu$m to about 800 $\mu$m) that is larger than a core diameter 528 of source fiber 510. A GRIN fiber with a ¼ pitch focal length $f$ will increase the $A_{eff}$ of an input Gaussian beam with a divergence $\theta$ and waist size $w_{in}$ if $f\theta > w_{in}$. In this case, the output waist $w_{out}$ is given by $f\theta$ which is greater than the input waist $w_{in}$. A modified beam traveling in divergence-preserving fiber 508 thus has a larger waist with $A_{eff}$ increased by the ratio $(w_{out}/w_{in-})^2$. Second GRIN fiber 506 is then configured to refocus the modified beam. When the two GRIN fibers have the same focal length, the output beam diameter is approximately the same as the input beam diameter despite the beam being larger between the two GRIN fibers.

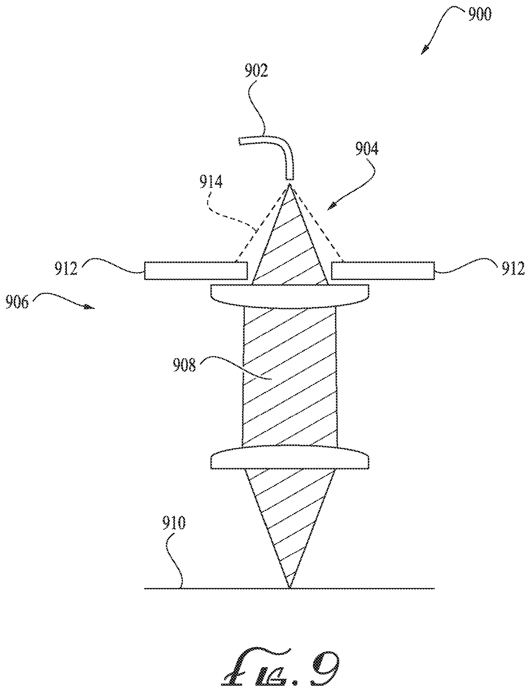

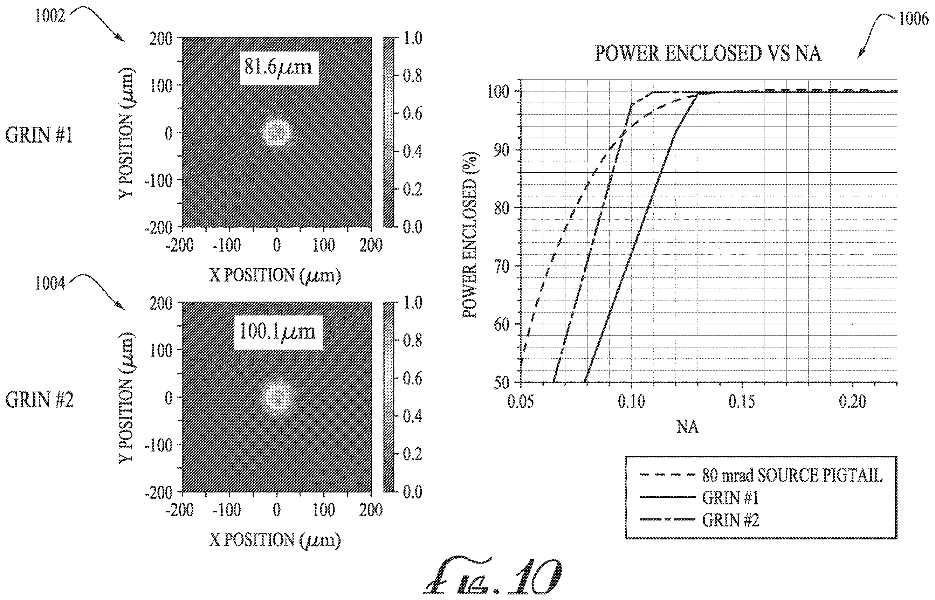

In some embodiments, core diameter 526 is sufficiently large to generate minimal cladding light. Optionally, a cladding light stripper may be incorporated on divergence-preserving fiber 508. Moreover, core diameter 526 and second GRIN fiber 506 focal length are chosen such that output divergence is sufficiently low for the desired end application as described later with reference to Equation 4 and FIG. 9 and FIG. 10.

First GRIN fiber 504 expands the beam (but not larger than core diameter 526 of step-index divergence-preserving fiber 508), and second GRIN fiber 506 reduces the diameter before end cap 514. First GRIN fiber 504 and second GRIN fiber 506 can have the same gradient constant (focal length) to replicate the input beam diameter or they may have different gradient constants to introduce in an output beam provided at output 512 a magnification or demagnification of the input beam. If the two GRIN lenses have the same focal length, the output beam diameter at the back focal plane of the second GRIN lens will be approximately equal to the beam diameter at the fiber laser output, but the beam will be larger between the two GRIN lenses (see FIG. 5), increasing the SRS threshold. The second GRIN lens can have a longer or shorter focal length than the first GRIN lens to increase or decrease the output beam diameter, respectively (with a corresponding change in the beam divergence), but the SRS-reduction effect still pertains. This approach thus reduces SRS without requiring fabrication of fiber tapers, and it provides flexibility in the chosen output beam diameter for a given input beam diameter.

Divergence-preserving fiber 508 may include a splice in which one or both the core diameter and the cladding diameter may be stepped up or down, as described in connection with optional splice 158 in FIG. 1. As in the case of optional splice 158, this splice may confer manufacturing, service, and performance advantages. In other embodiments, divergence-preserving fiber 508 includes an FFC/FFS (as shown in FIG. 1).

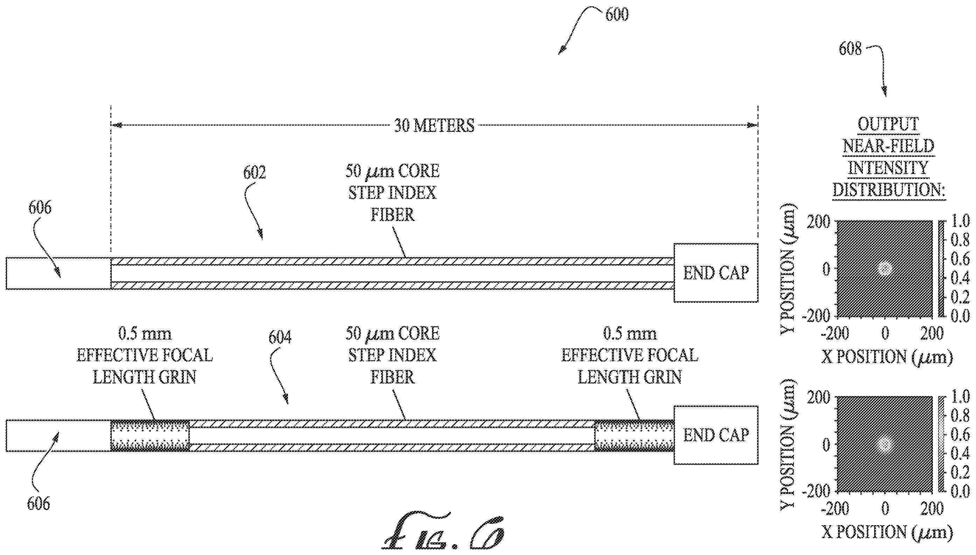

FIG. 6 shows a comparison test system 600 for characterizing the reduction in SRS provided by a beam delivery system similar to that shown in FIG. 5. Comparison test system 600 includes a conventional 30-meter 50 μm step-index feeding fiber assembly 602 and a 30-meter feeding fiber assembly 604. Similar to the fiber assembly shown in FIG. 5, feeding fiber assembly 604 includes three fibers spliced together: an input ¼ pitch GRIN fiber with an effective focal length of 0.5 mm, a 30-meter length of 125 μm core step-index fiber, and an output ¼ pitch GRIN fiber with an effective focal length of 0.5 mm. Feeding fiber assembly 604 is similar to optical beam delivery system 500 (FIG. 5) in that both have a divergence-preserving fiber with a core diameter that is larger than the core diameter of fiber laser 606.

At each input, a 5-kW fiber laser 606 is spliced to feeding fiber assembly 602 and feeding fiber assembly 604. The core diameter of the input to each feeding fiber is approximately 40 μm. In both configurations, output near-field beam diameters 608 were approximately 50 μm. In both cases there was an end cap spliced to the output fiber.

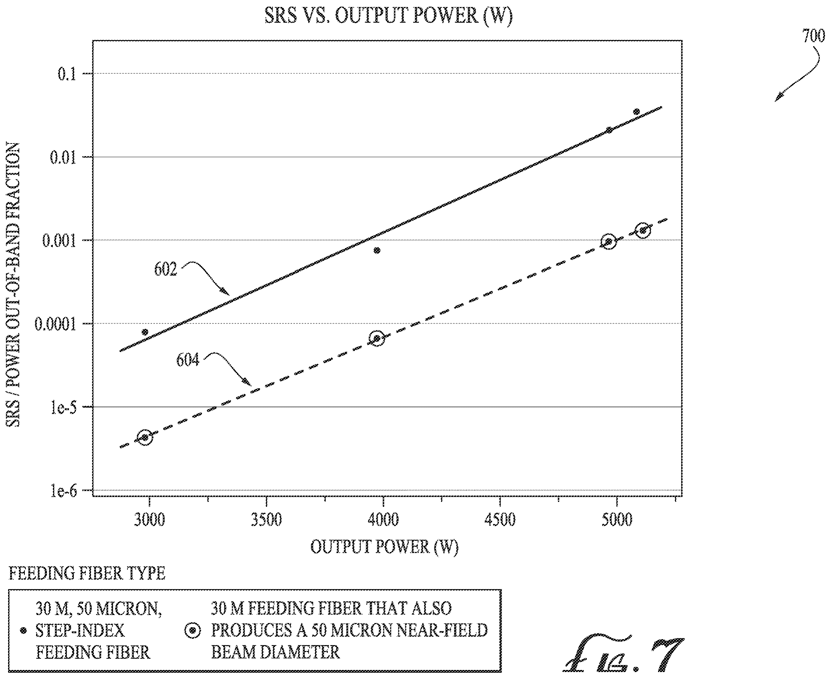

As indicated by test results 700 (FIG. 7) for comparison test system 600, at a total output power of 5.1 kW, the output SRS signal was reduced by approximately 15 dB, from 3.5% in the case of conventional feeding fiber assembly 602 to 0.1% with feeding fiber assembly 604. For all power levels, the SRS fraction is lower with feeding fiber assembly 604 than with the standard step-index feeding fiber. Test results 700 show a significant reduction in SRS fraction with the increase in the output fiber core size, which is consistent with SRS reduction provided by optical beam delivery system 500 shown in FIG. 5.

The above-described approach to reducing SRS could be implemented in various laser system configurations such as pulsed fiber lasers (e.g., Q-switched, mode-locked, QCW), CW fiber lasers, non-fiber lasers (e.g., direct diode lasers, disk lasers, or rod lasers) with an optical delivery fiber, multimode lasers, and lasers systems using a FFC or FFS.

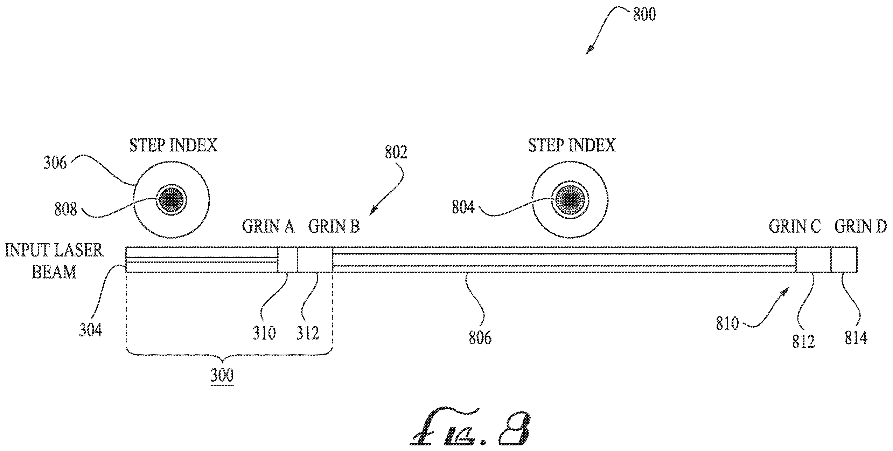

In another embodiment, optical beam delivery system 300 (FIG. 3) can also be employed to reduce SRS. As shown in FIG. 8, a first pair of spliced GRIN fibers 802 of optical beam delivery system 300 magnifies the near-field intensity distribution of the beam (i.e., EFL of second GRIN lens 312 is larger than that of first GRIN lens 310) and couples the magnified beam into a core 804 of a step-index fiber 806. Step-index fiber 806 is similar to divergence-preserving fiber 508 in that core 804 is larger than a core 808 of source fiber 304. The size of core 804 closely matches (e.g., within about 15 μm) the extent of the magnified beam at the output of second GRIN lens 312. This intermediate beam is then scaled (e.g., demagnified) by a second pair of spliced GRIN fibers 810 (including a third GRIN lens 812 and a fourth GRIN lens 814) to achieve the final target output beam diameter. Second pair of spliced GRIN fibers 810 may be akin to first pair of spliced GRIN fibers 802, except have the opposite EFL arrangement for demagnification.

A particular configuration exists where the EFL of first GRIN lens 310 equals that of fourth GRIN lens 814 and the EFL of second GRIN lens 312 equals that of third GRIN lens 812. This configuration produces an approximate image of the input beam to first GRIN lens 310 at the output of fourth GRIN lens 814.

As described previously, since the intermediate beam in core 804 has a lower average intensity (or larger effective mode area) compared to the beam in core 808, detrimental nonlinear effects such as SRS are reduced compared to a system of the same length comprised of only source fiber 304. This allows for longer feeding fibers with less heating and lower loss of power from the primary laser wavelength. In contrast to optical beam delivery system 500 (FIG. 5), optical beam delivery system 800 preserves the shape of the input near-field intensity distribution at the output of each pair of GRIN lenses. In the case of a fiber laser input with flat top intensity distribution, optical beam delivery system 800 results in better preservation of the laser BPP at the output compared with optical beam delivery system 500.

The configuration shown in FIG. 8 could represent a feeding fiber or a process fiber (with typical lengths of 5 to 30 meters). A process fiber with a given magnification could be easily swapped with another process fiber with a different magnification. A feeding fiber with a given magnification could be swapped with another feeding fiber with a different magnification by means of a field splice.

Predefined Maximum NA

Industrial fiber lasers are paired with external process optics with fixed numerical apertures. These process optics include beam couplers, beam switches, collimators, cutting heads, scanners, and zoom optics. These process optics have limited ability to accept light outside of the device numerical aperture, typically restricted by heating of components. Often the native output beam divergence of a fiber laser can exceed the allowable aperture of the process optics which prevents compatibility. This is a problem presents particularly in multimode fiber lasers systems which have inherently larger divergences.

FIG. 9 shows an optical beam delivery system 900 including a delivery fiber (i.e., a feeding or process fiber) 902 providing an output beam 904 for a process head 906 that produces a collimated beam 908 and then focuses it onto (or near) the surface of a workpiece 910 (other configurations of the process head are possible, including additional lenses, multiplet lenses, zoom optics, reflective optics, scanners, etc.). Process head 906 typically has a maximum NA that it can accept, which may be defined by an aperture 912 prior to the optics, as shown in FIG. 9. The maximum NA may also be defined by other apertures within the optical train, by lens mounts, by the physical dimensions of the lenses or other optical components, or by some other feature of the optical system (not shown in FIG. 9). Optical power within output beam 904 that is outside the maximum NA of the process head (sometimes call a "high-NA tail" 914 of output beam 904) will be clipped by aperture 912 or otherwise lost from output beam 904, which can cause undesirable heating, damage, or other problems within process head 906.

Previous nLIGHT approaches for limiting high divergence light in the laser rely on using a fiber with a low core NA to leak light into the cladding prior to the cladding light stripper. Examples are shown in U.S. Patent Application Publication No. US 2023/0106619 A1. This approach has two limitations: (1) producing and replicating fibers with a particular NA is challenging and typically results in some deviation from the desired clip level in the product and (2) the loss to the cladding in the low NA fiber can depend on fiber length and fiber routing which can vary in the laser, resulting in additional variation in power loss and divergence clip level.

In contrast, when fiber assembly 104 is employed as delivery fiber 902, output beam 904 has a well-defined maximum NA, and therefore passes through the process optics without excessive clipping. The maximum NA is engineered into the fiber such that there is a hard cutoff with no high-NA tail (i.e., no high-divergence light 914) because the far-field divergence profile of optical beam delivery system 100 (FIG. 1) is determined by the spatial distribution of light in divergence-preserving fiber 132 and the focal length of second GRIN fiber 136. Maximum NA rays originate at an outer periphery of step-index core 150. Accordingly, a maximum NA ($NA_{max}$) is engineered into fiber assembly 104 as follows in Equation 4:

$$NA_{max} = \sin\left(arc\tan\left(\frac{d_{core}}{2f}\right)\right) \cong \frac{d_{core}}{2f} \ for \ small \ small \ angles$$

In some applications, a high-NA tail with a relatively small amount of the total power (e.g., 2%) can still cause problems associated with compatibility with process optics, particularly with higher laser powers. The maximum allowed NA and the maximum allowed power above that NA depend on the application and the design of the process optics. A quantitative example of a maximum NA specification for process optics is at least 99.5% of the laser power within an NA of 0.10; skilled persons will appreciate, however, that other percentages and NA values are possible, depending on the design of the process optics. For typical laser systems, the power in the high-NA tail may vary from laser to laser and, for a given laser, as a function of laser power and of time. These variations result, in turn, in inconsistent performance or inconsistent compatibility of lasers with the process optics. A well-defined $NA_{max}$ for the laser system, per Equation 4, can ensure compatibility of the laser system with the process optics.

A well-controlled output divergence is useful in industrial fiber laser applications. Improved (lower) divergence will allow use with lower NA external process optics, allowing for new applications in welding, cutting, and additive manufacturing. Better control over the divergence clip level will also save cost and increase reliability of the laser by not dissipating excessive power due to divergence clipping.

FIG. 10 shows examples of how $NA_{max}$ is engineered into fiber assemblies. On the lefthand side of FIG. 10 are two near-field intensity distributions for two different variants of optical beam delivery system 100 (i.e., two different second GRIN fibers 136). A first intensity distribution 1002 corresponds to a first variant having a first GRIN focal length, and a second intensity distribution 1004 corresponds to a second variant having a second GRIN focal length that is 1.2× the first GRIN focal length. A corresponding plot 1006 of power enclosed versus NA shows how the two variants are engineered with different maximum output NAs. When using GRIN #2, the near-field beam diameter is increased by approximately 20%, and $NA_{max}$ is decreased by approximately 20% with respect to the results with using GRIN #1. Both these fiber assemblies were tested using an input source 106 with an 80 mrad divergence (NA = 0.08), shown by the dashed line in plot 1006.

Skilled persons will appreciate that Equation 4 applies irrespective of whether a fiber assembly includes a first lens (e.g., first GRIN fiber 134, FIG. 1). In other words, $NA_{max}$ can be matched to, and optimized for, the downstream process optics or process head based on the core diameter of divergence-preserving fiber 132 and the effective focal length of a second lens (e.g., second GRIN fiber 136, FIG. 1).

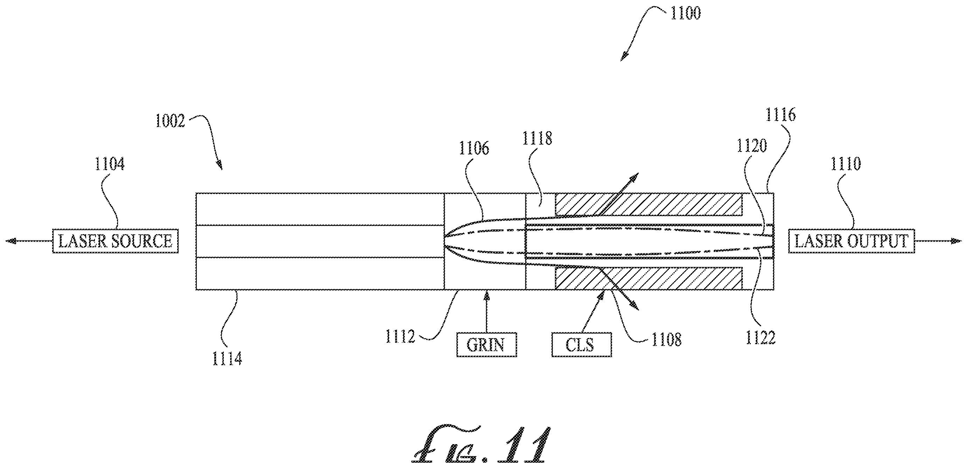

FIG. 11 shows an optical beam delivery system 1100 configured as a divergence limiting fiber assembly 1102, which is an all-fiber device that may be built into a fiber laser 1104 to dissipate any higher-divergence source light 1106 into a CLS 1108 prior to delivery fiber output 1110.

In optical beam delivery system 1100, a relatively short section (e.g., 10 millimeters or less) of GRIN fiber 1112 is spliced between an input step-index fiber 1114 and an output step-index fiber 1116. GRIN fiber 1112 acts to redirect higher-divergence source light 1106 into cladding 1118 of output step-index fiber 1116, where it can then be stripped by CLS 1108. Thus, CLS 1108 removes higher-divergence source light 1106 in a controlled manner while lower-divergence light 1120 is coupled into a core 1122 of output step-index fiber 1116.

In one configuration, GRIN fiber 1112 length is set at ¼ pitch such that the fiber acts as a conventional lens. In such a configuration, the output NA is described in Equation 4. This is similar to the configuration shown in FIG. 1, in which input step-index fiber 1114 corresponds to step-index fiber 106, GRIN fiber 1112 corresponds to first GRIN fiber 134, CLS 1108 corresponds to CLS 164, and output step-index fiber 1116 corresponds to divergence-preserving fiber 132. GRIN fiber 1112 may be spliced before CLS 1108 or co-located in a mechanical package with CLS 1108.

Input step-index fiber 1114 and output step-index fiber 1116 may have the same core diameter or different core diameters. In the case of a step-up in core diameters, the GRIN with a specified effective focal length can act to lower the divergence of the laser beam with little or no additional loss in CLS 1108. Also, as shown in FIG. 1, input step-index fiber 1114 could also have a CLS (see e.g., CLS 166, FIG. 1) to remove any cladding light at the input.

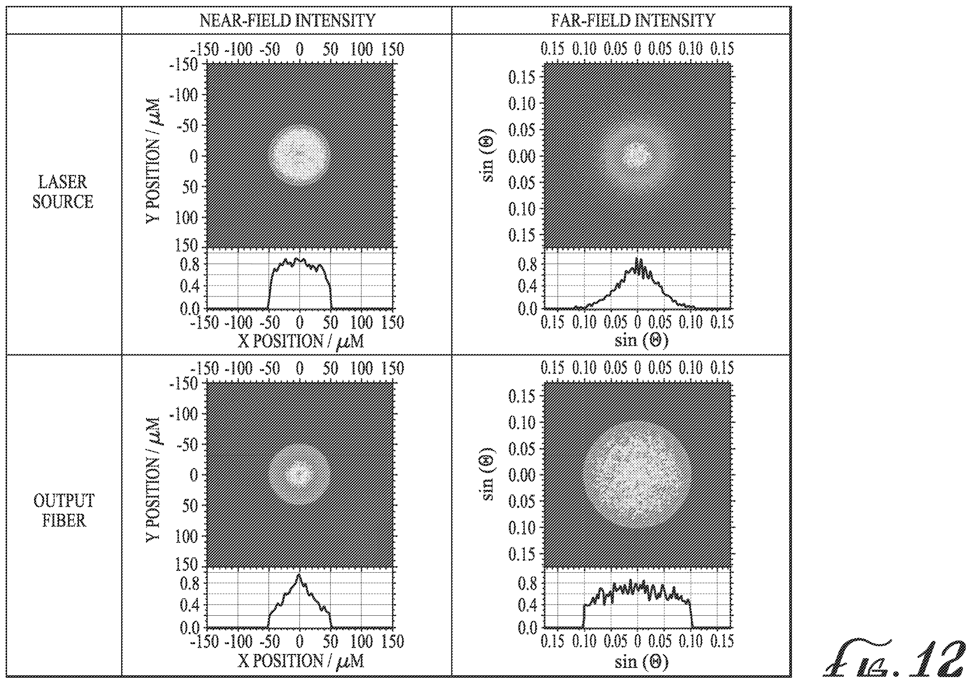

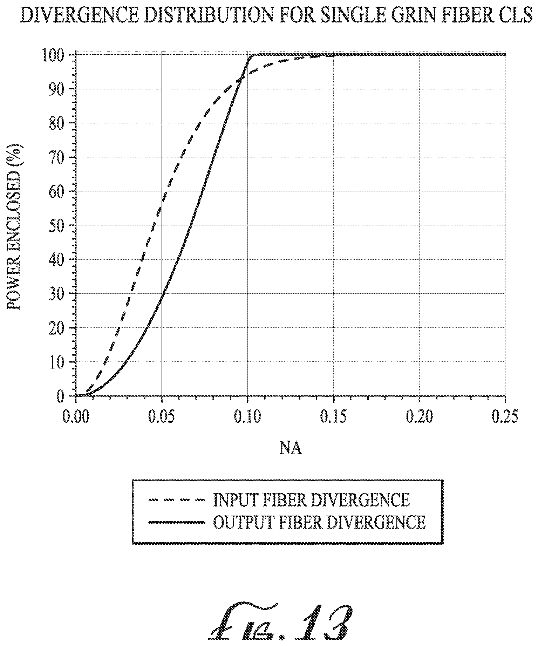

Simulated near-field and far-field intensity distributions and one-dimensional profile views for optical beam delivery system 1100 are shown in FIG. 12 and FIG. 13.

In FIG. 12, the top row shows input source fiber beam properties. The representative source used is a 100 $\mu$m diameter fiber with 80 mrad second-moment divergence. In the bottom row, CLS output fiber beam properties are shown (i.e., output 1110).

FIG. 13 shows a power enclosed versus NA plot (divergence distribution) for input step-index fiber 1114 and output step-index fiber 1116.

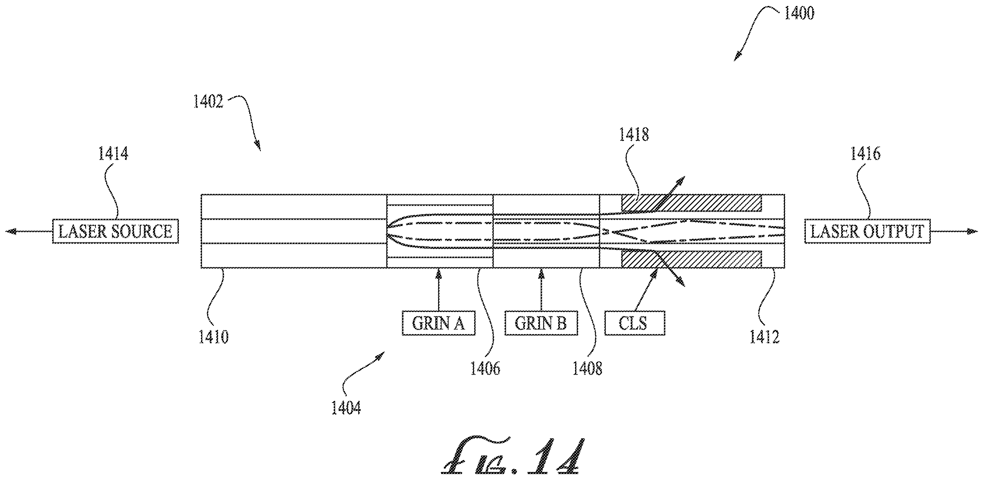

FIG. 14 shows another optical beam delivery system 1400 configured as a divergence limiting fiber assembly 1402. divergence limiting fiber assembly 1402 is similar to divergence limiting fiber assembly 1102 except instead of a single GRIN fiber 1112, divergence limiting fiber assembly 1402 includes a back-to-back GRIN fibers 1404 (a first GRIN fiber 1406 and a second GRIN fiber 1408). As described previously in FIG. 11, divergence limiting fiber assembly 1402 includes an input step-index fiber 1410, an output step-index fiber 1412, a laser source 1414, an output 1416, and a CLS 1418.

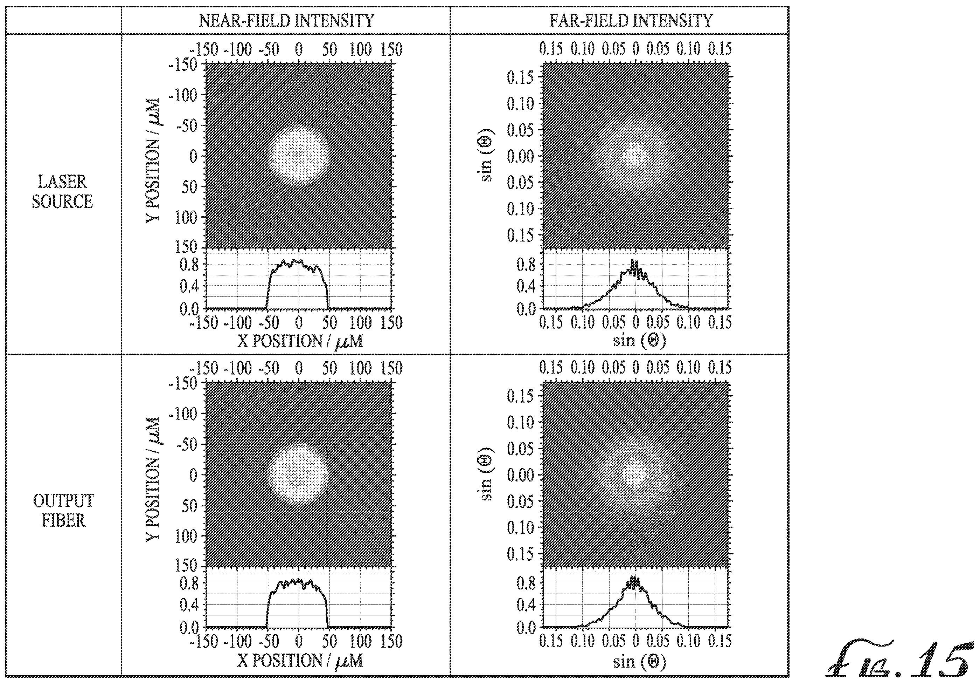

FIG. 15 shows that optical beam delivery system 1400 preserves the near field while still clipping the high NA light. This is so because in this back-to-back GRIN fibers 1404, first GRIN fiber 1406 and second GRIN fiber 1408 have different core sizes. The smaller core size of second GRIN fiber 1408 refocuses the lower divergence light to preserve its near field.

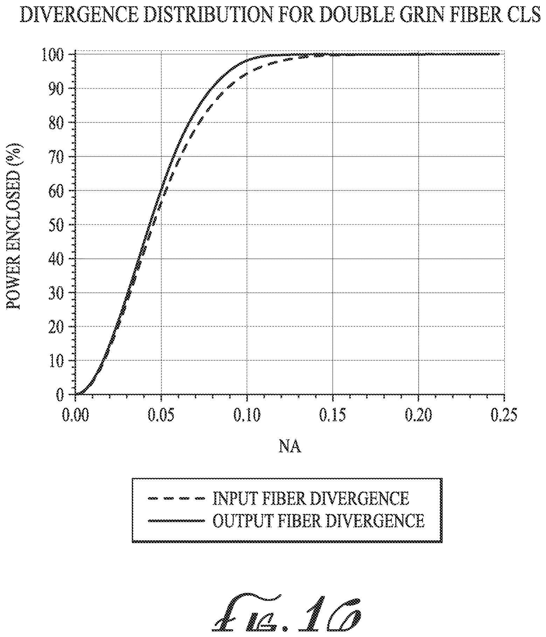

FIG. 16 shows the power enclosed versus NA plot (divergence distribution) for the input and output fibers of FIG. 14.

Generation of Ring Beam Shapes

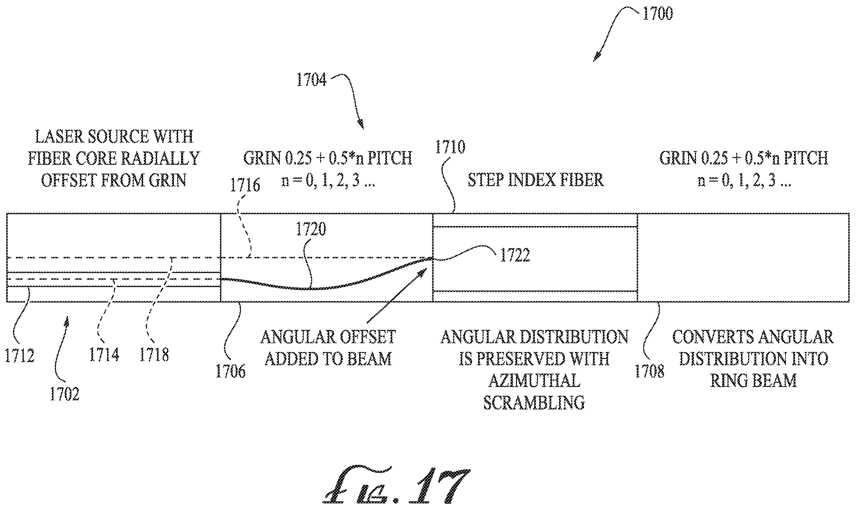

FIG. 17 shows another embodiment of an optical beam delivery system 1700 including a source fiber 1702 and a fiber assembly 1704. Fiber assembly 1704 is similar to fiber assembly 104 (see, e.g., RIPs shown in FIG. 1), image relay fiber assembly 204 (FIG. 2), and fiber assembly 502 (FIG. 5). For instance, fiber assembly 1704 includes a first GRIN fiber 1706, a second GRIN fiber 1708, and a divergence-preserving fiber 1710 coupled (i.e., spliced or placed at or within one Rayleigh range) between first GRIN fiber 1706 and second GRIN fiber 1708.

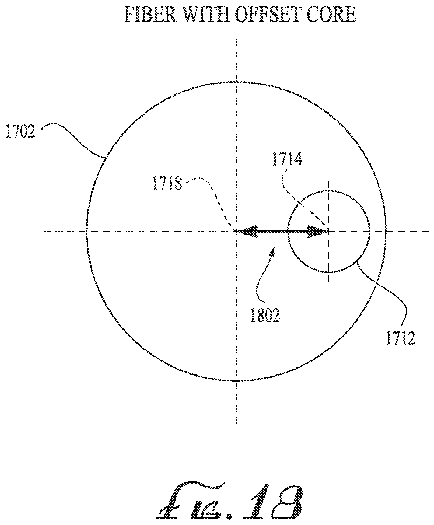

Source fiber 1702 is coupled to first GRIN fiber 1706 and includes a fiber core 1712 defining a first optical axis 1714. First optical axis 1714 has a radial offset 1802 (FIG. 18) relative to both a centrally located second optical axis 1716 of fiber assembly 1704 and a centrally located longitudinal axis 1718 of source fiber 1702.

When a beam 1720 is delivered by fiber core 1712 to first GRIN fiber 1706, first GRIN fiber 1706 imparts an angular offset to form an intermediate beam 1722 delivered to divergence-preserving fiber 1710. An angular distribution of intermediate beam 1722 is preserved by divergence-preserving fiber 1710, which also introduces azimuthal scrambling to intermediate beam 1722. An output beam of divergence-preserving fiber 1710 is then refocused by second GRIN fiber 1708 so as to form a ring beam at an output of second GRIN fiber 1708. This approach, therefore, generates a ring beam in an all-fiber system without employing ring fibers and mechanical actuator components on fibers sensitive to bending or other perturbations.

Skilled persons will appreciate that, in the aforementioned embodiment of FIG. 17 and FIG. 18, as well as the following embodiments, the input beam is guided with no angular offset to the input GRIN axis. The first GRIN thereby acts to convert the spatial offset to angular offset.

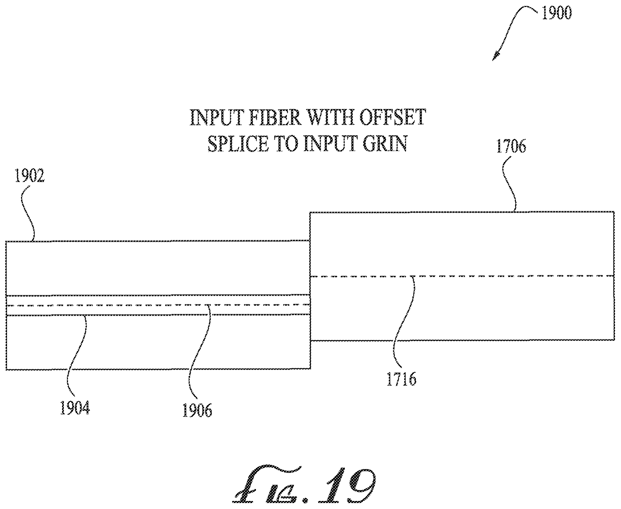

FIG. 19 shows a fragment of another optical beam delivery system 1900. In the example of FIG. 19, a source fiber 1902 includes a centrally located fiber core 1904 that is coaxially aligned with a central optical axis 1906 of source fiber 1902. Source fiber 1902, however, is spliced to first GRIN fiber 1706 so that centrally located fiber core 1904 is radially offset from second optical axis 1716 of first GRIN fiber 1706. Like optical beam delivery system 1700, the embodiment of FIG. 19 also generates the ring beam in an all-fiber system without employing ring fibers and mechanical actuator components (i.e., the radial offset shown in FIG. 19 provides the same function as the radially offset core in FIG. 17 and FIG. 18).

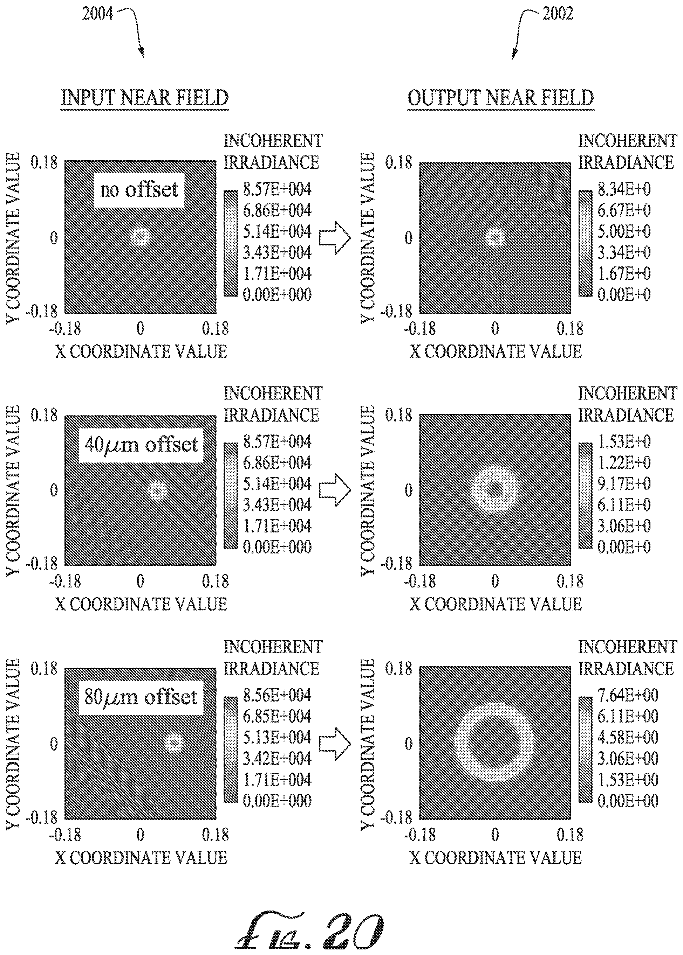

FIG. 20 shows example output near-field beam profiles 2002 obtained from a ray trace simulation for input beams 2004 with various radial offsets in optical beam delivery system 1700 (FIG. 17). A centrally located input beam provides an output beam that has a similar shape as the input beam (with optional magnification or demagnification). A radially offset input beam provides a ring-shaped output beam, and as additional offset is introduced to input beams 2004, the ring shape in output near-field beam profiles 2002 expands.

Generation of Composite Beam Shapes

Some applications have found benefits from using a laser beam shape that includes a central spot (typically approximately 50-100 $\mu$m in diameter) surrounded by a halo or pedestal (typically approximately 150-600 $\mu$m in diameter). This beam shape can be generated by using a dual-core delivery fiber comprising a central guiding region (typically step index) surrounded by an annular (ring-shaped) guiding region (also typically step index), i.e., a ring fiber. The beam shape is determined by the dimensions of the central and annular cores and by the relative power guided in each region. One or more free-space beams can be launched into the dual-core fiber to generate the desired beam shape. Alternatively, a fused-fiber combiner can be used to couple different fiber or fiber-coupled input lasers into the central and annular guiding regions. The latter approach has an advantage in that there are no free-space optics between the output fibers of the individual lasers and the output of the dual-core fiber, i.e., it enables an all-fiber design. It has the disadvantage, however, that the maximum power in each region (and thus the full-power beam shape) is constrained at the time of manufacture; the full laser power is available in only one beam shape, and different beam shapes can be obtained only by reducing the power of one or more of the input lasers. Another disadvantage is that provision of different core diameters and ring diameters and thicknesses requires fabrication of different ring fibers with the desired dimensions.

To achieve a variety of beam diameters and shapes using all-fiber embodiments and techniques described in the '768 patent, it is possible to divide the spatial intensity distribution of a laser beam coupled to a ring fiber between two or more guiding zones of the fiber. This approach can provide full power in all the beam shapes because partitioning of the output power of the laser system among the guiding zones can be varied. A disadvantage of this approach, however, is that it can cause a portion of the beam to overlap the low-index region(s) separating the guiding zones, resulting in increased beam divergence (high-NA tail). This increased divergence is undesirable for some applications, e.g., it can cause overheating of some process optics or apertures, which limits the potential end use applications, particularly in cases where laser beam scanners are used.

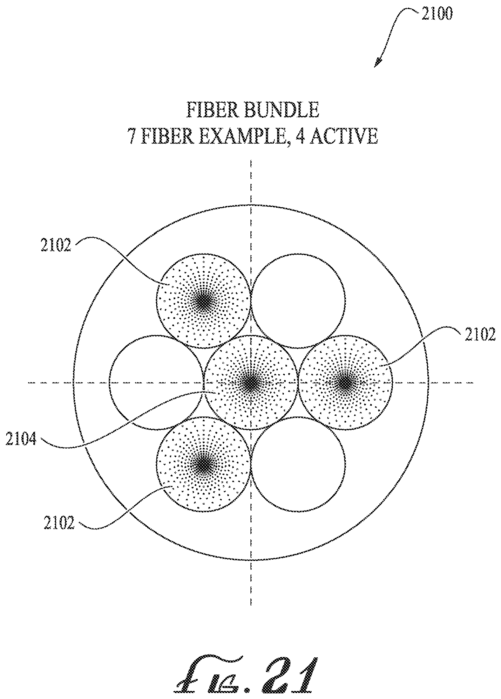

The embodiments of FIG. 21-FIG. 23 use multiple input beam locations into a fiber assembly such as 104, 204, or 502 to address several problems described above with reference to the '768 patent. First, the aforementioned low-index regions separating guiding regions in a multi-core fiber are eliminated, thereby eliminating the risk of divergence increase from coupling into the low-index guiding regions and the tight alignment tolerances for splicing in the factory and the field. Second, in the conventional approach, changing the dimensions of the central core and/or the annual core requires fabrication of a new dual-core (ring) fiber and the corresponding fused-fiber combiner. In the new approach, the output beam parameters can be changed by changing the dimensions of the bundle or by changing the relative focal lengths of the two GRIN lenses, all while maintaining the same step-index fiber (and even if a different step-index fiber is used, it is less costly and time-consuming that producing a new dual-core fiber).

The new approach described with reference to FIG. 21-FIG. 23 also introduces new design possibilities that would be difficult or impossible with the conventional approach. A composite beam shape having an optional central spot and two or more annular rings of different diameters could be generated by fabricating a bundle with fibers located at different radial displacements from the central fiber(s). Although this possibility also exists with the conventional multi-core approach, it becomes increasingly difficult and costly as the number of annular cores is increased because of the tolerances on fabrication and splice alignment of the multi-core fiber. Furthermore, the approach shown in FIG. 21-FIG. 23 is capable of producing composite beam shapes that are not possible with the conventional approach, including a central core surrounded by an overlapping annular beam and/or two or more overlapping annular beams (with or without a central core). These beam shapes may be generated by appropriate positioning of the peripheral fibers to provide the desired beam overlap. Such beam overlap is not possible with the conventional approach because of the required separation between the cores in a multi-core fiber.

FIG. 21 shows an example of a fiber bundle 2100 that can be used as a substitute for source fiber 1702 (FIG. 17). Fiber bundle 2100 includes a fused or unfused bundle of individual fibers. Some of the fibers are shown propagating beams whereas others are not (in general, any number of the input fibers may be used to propagate beams). Outer fibers 2102 are radially offset from, and a central fiber 2104 is optionally axially aligned with, second optical axis 1716 (FIG. 17). First GRIN fiber 1706 (acting as a first GRIN lens) maps central fiber 2104 to low propagation angles in divergence-preserving fiber 1710 and maps outer fibers 2102 to larger propagation angles. Second GRIN fiber 1708 (acting as a second GRIN lens) then converts the low-angle rays from the central laser to a central spot and the high-angle rays from the peripheral lasers to a surrounding ring at the back focal plane of the second GRIN lens. (The peripheral beams form a ring because of azimuthal scrambling as the beams propagate in divergence-preserving fiber 1710.) Note that the various beams are not spatially separated within the step-index feeding fiber (in contrast to the situation with the prior art dual-core fiber), but a composite beam shape is nonetheless generated. As in the SRS-reducing and other embodiments, the two GRIN lenses can have the same or different focal lengths, which will influence the output beam size and divergence.

In this example, all fiber positions are connected to different laser sources. Each laser source could have independent power control resulting in fine control of the resulting beam profile output from second GRIN fiber 1708. Thus, an intensity distribution of an output from second GRIN fiber 1708 can be modified by changing the amount of light applied to any of outer fibers 2102 and central fiber 2104, allowing generation of a variety of beam shapes, as with the conventional approach (dual-core fiber) but without the disadvantages of the conventional approach.

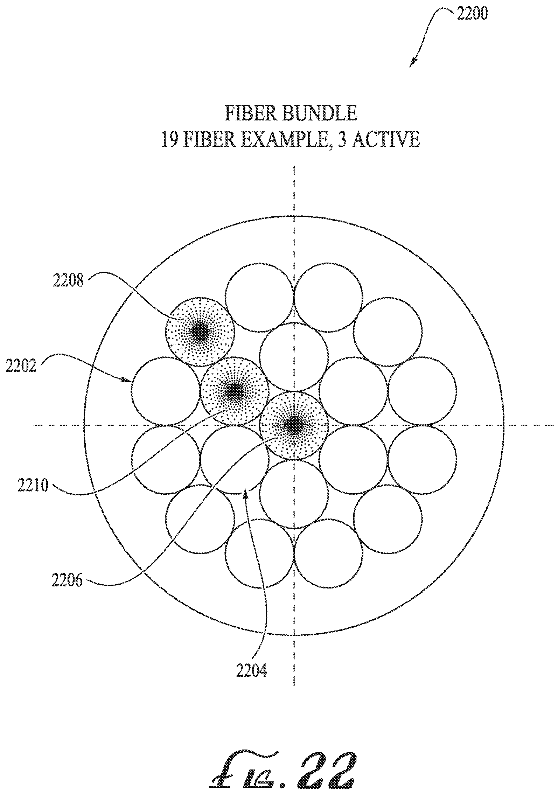

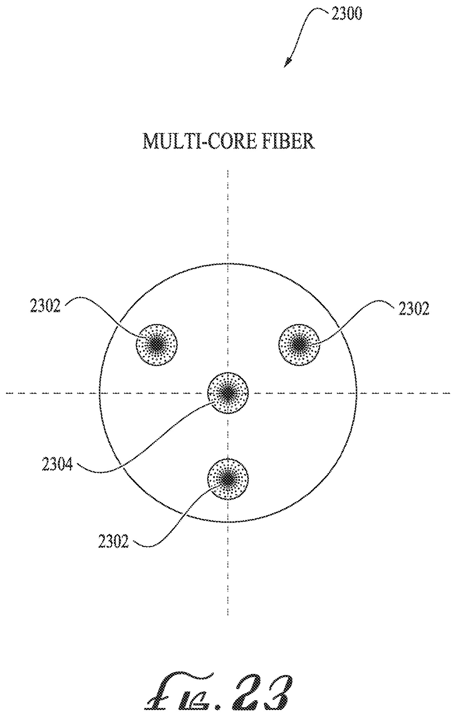

FIG. 21 and FIG. 23 (described later) show examples where all the outer fibers (FIG. 21) or outer cores (FIG. 23) are located at roughly the same radial distance from the central axis. In contrast, FIG. 22 shows an example of a fiber bundle 2200 (or multi-core fiber, in other embodiments) having an outer ring 2202 of fibers, an inner ring 2204 of fibers, and a central fiber 2206. Thus, an excited outer fiber 2208 has a larger radial distance than that of an excited inner fiber 2210. Fiber bundle 2200 can generate a variety of near-field intensity profiles depending on the power associated with each laser source and radial offsets of the source fibers in the bundle.

In some embodiments, fiber bundle 2200 could replace a signal combiner when using multiple fiber laser sources. A signal combiner is a fused fiber component in which multiple input fibers are spliced into an output fiber. The embodiment of FIG. 22 similarly connects multiple input fibers to an output fiber, but with added spatial beam control.

One method of creating a fiber bundle is to fuse the bundle together while drawing the bundle down to a smaller diameter (i.e., a taper). Accordingly, in some embodiments, an input bundle may have a taper to set the input core diameters and distances (radial positions).

As a different option compared to a fiber bundle (FIG. 21 and FIG. 22), FIG. 23 shows a multi-core fiber 2300 that can be used as a substitute for source fiber 1702 (FIG. 17) such that outer cores 2302 are radially offset from, and a central core 2304 is optionally axially aligned with, second optical axis 1716 (FIG. 17). First GRIN fiber 1706 (acting as a first GRIN lens) maps the central input port (central core 2304) to low propagation angles in divergence-preserving fiber 1710 and maps the peripheral input ports (outer cores 2302) to larger propagation angles. Second GRIN fiber 1708 (acting as a second GRIN lens) then converts the low-angle rays from the central laser to a central spot and the high-angle rays from the peripheral lasers to a surrounding ring at the back focal plane of the second GRIN lens. (The peripheral beams form a ring because of azimuthal scrambling as the beams propagate in divergence-preserving fiber 1710.) Note that the various beams are not spatially separated within the step-index feeding fiber (in contrast to the situation with the prior art dual-core fiber). As in the SRS-reducing and other embodiments, the two GRIN lenses can have the same or different focal lengths, which will influence the output beam size and divergence.

In this example, all fiber positions are connected to different laser sources. Each laser source could have independent power control resulting in fine control of the resulting beam profile output from second GRIN fiber 1708. Thus, an intensity distribution of an output from second GRIN fiber 1708 can be modified by changing the amount of light applied to any of outer cores 2302 and central core 2304, allowing generation of a variety of beam shapes, as with the conventional approach (dual-core fiber) but without the disadvantages of the conventional approach.

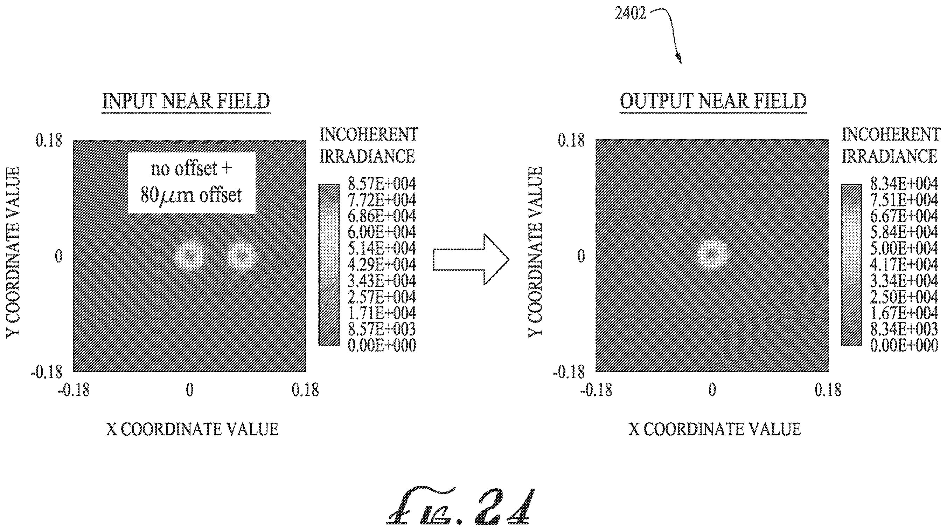

FIG. 24 shows an example output near-field beam profile 2402 when two input sources (e.g., two fibers in a bundle) are active, demonstrating generation of a composite beam shape according to one embodiment. In this example, the combined output beam is a superposition of two input sources, each of which may be separately controllable in terms of power level, power modulation (e.g., pulsing), or more generally the output waveform (power vs. time). Since the size of ring or saddle shapes is selectable based on radial offset of the input source(s), different combinations of nested or overlapping ring, saddle, or pedestal shapes are also possible.

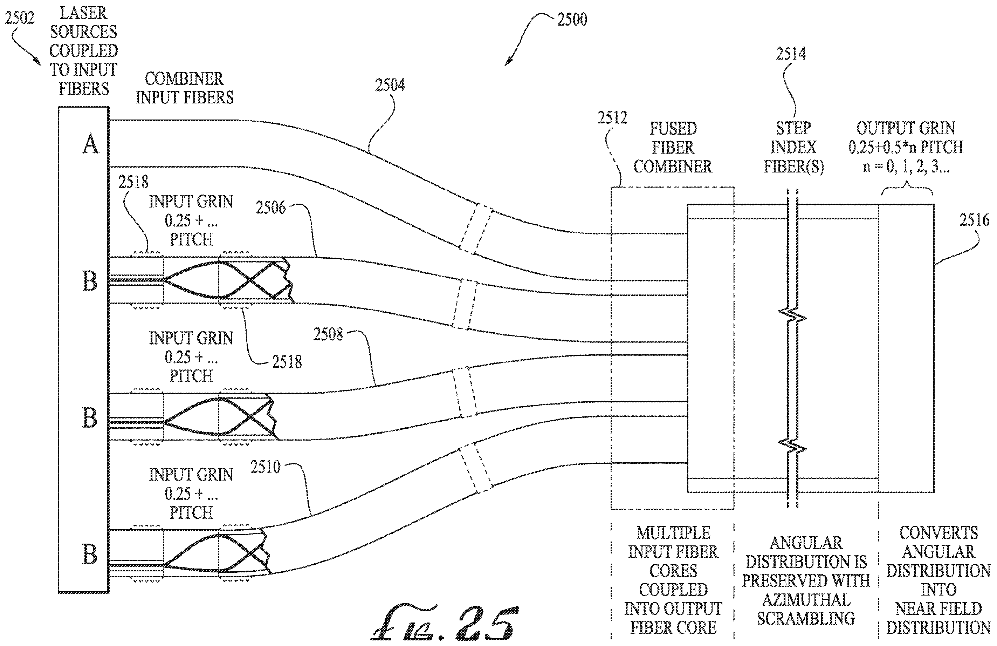

FIG. 25 shows another variant of an optical beam delivery system 2500 for generating composite beam shapes using separately controllable laser sources, each one of which is coupled to a different input fiber 2502. In this example, a first laser source is coupled to a first input fiber 2504, a second laser source is coupled to a second input fiber 2506, a third laser source is coupled to a third input fiber 2508, and a fourth laser source is coupled to a fourth input fiber 2510. In some embodiments, there may be different numbers (or different types) of input fibers.

A fused fiber combiner 2512 couples each input fiber 2504, 2506, 2508 and 2510 to a divergence-preserving fiber 2514. Divergence-preserving fiber 2514 is coupled to an output GRIN fiber 2516. As described previously, divergence-preserving fiber 2514 is a step-index fiber and output GRIN fiber 2516 acts as a lens, i.e., having a pitch of ¼ + ½ n, where n equals zero or any positive integer (0, 1, 2, ...). Other types of lenses are also possible.

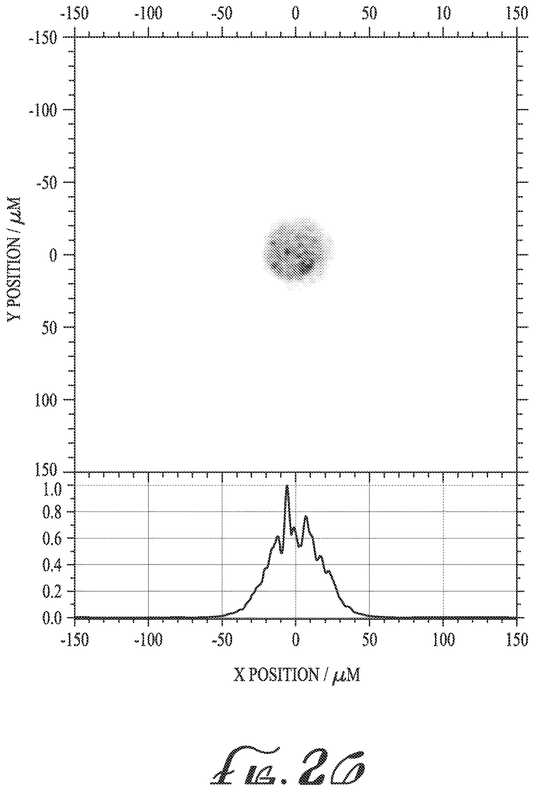

In the example of FIG. 25, first input fiber 2504 is a step-index fiber or other type of fiber with one guiding zone. Accordingly, in conjunction with divergence-preserving fiber 2514 and output GRIN fiber 2516, an output beam provided by first input fiber 2504 has a central beam with a near-field diameter proportional to the source laser divergence. An example of this output is shown in FIG. 26.

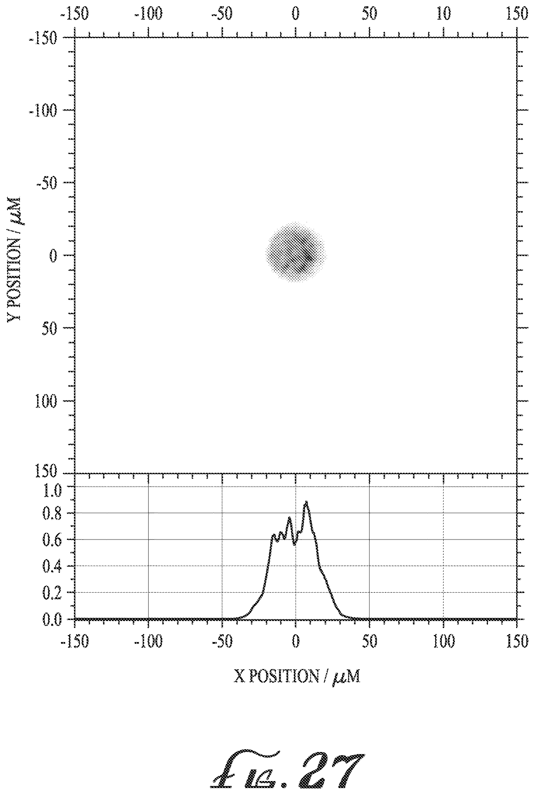

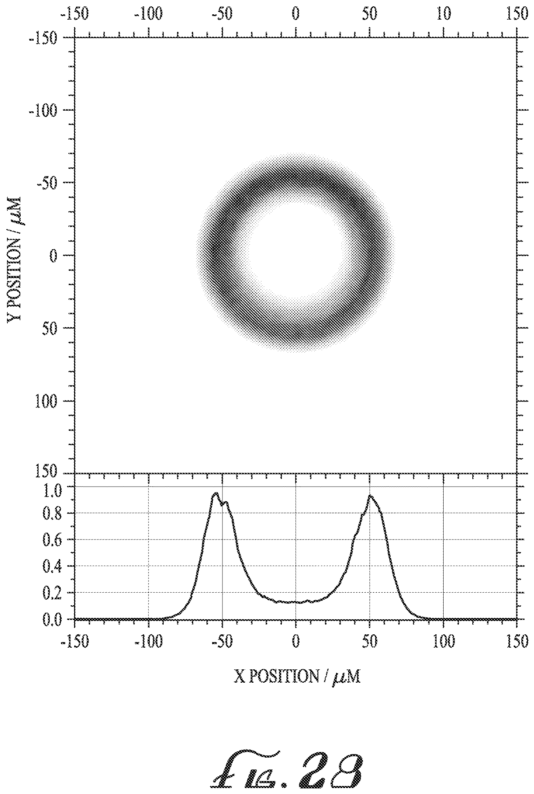

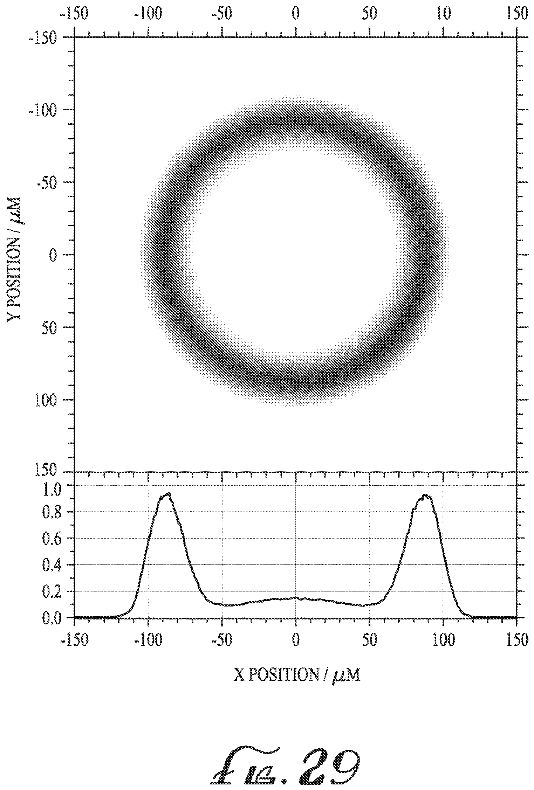

Second input fiber 2506, third input fiber 2508, and fourth input fiber 2510 are similar to optical beam delivery system 1700 in that each input fiber includes (1) a step-index input fiber with an optional radial offset, (2) a GRIN lens, (3) a divergence-preserving fiber with the splice to divergence-preserving fiber 2514, and (4) and output GRIN fiber 2516. In this example, the radial offsets for each of second input fiber 2506, third input fiber 2508, and fourth input fiber 2510 are, respectively, 0 $\mu$m, 50 $\mu$m, and 85 $\mu$m, such that the resulting outputs for each fiber are shown in FIG. 27, FIG. 28, and FIG. 29. Specifically, with no radial offset, second input fiber 2506 provides at the output of output GRIN fiber 2516 a central beam with a near-field diameter proportional to the source laser diameter. With a slight radial offset of 50 $\mu$m, third input fiber 2508 provides a ring shape having a relatively small diameter. And with a larger radial offset of 85 $\mu$m, fourth input fiber 2510 provides a ring shape having a larger diameter. The specific offsets and beam diameters shown in this example are representative, and other dimensions and beam properties are attainable without departing from the scope of the invention.

When multiple lasers sources are coupled into combiner input channels simultaneously, the combined output beam is a superposition of the individual channel output beams. This approach allows the combined power of the multiple input sources to be superimposed within the same near-field beam profile, independently selected to different intermediate spatial profiles between a spot and a ring, and superimposed within the same near-field beam profile by the system controller.

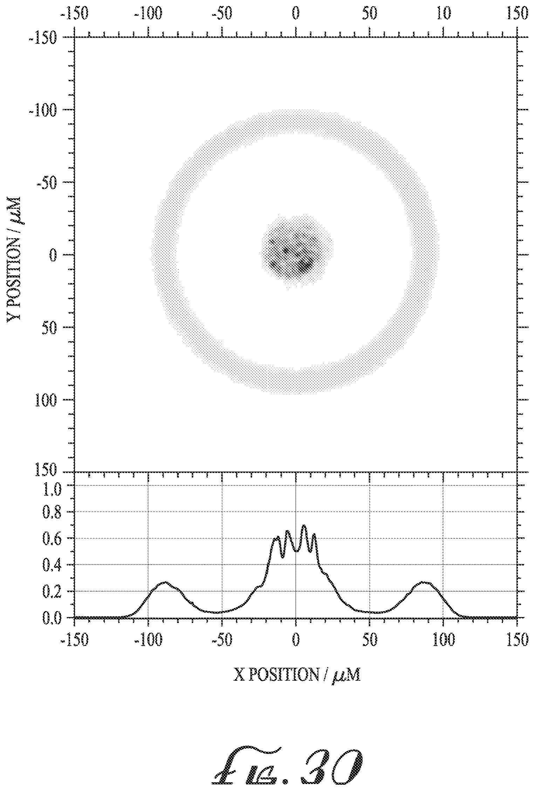

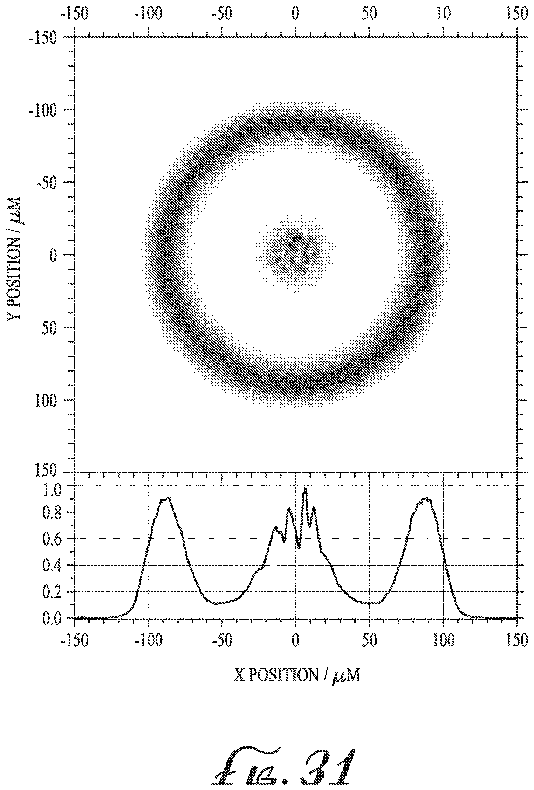

Because sources of beams for each input fiber of optical beam delivery system 2500 are separately controllable (e.g., adjustable continuous or pulsed power, on/off pulse durations, output waveforms, etc.), different fibers and combinations of fibers may propagate beams that are combined to generate composite beam shapes at the output of output GRIN fiber 2516. For example, FIG. 30 shows an output when first input fiber 2504 and fourth input fiber 2510 are providing beams, and with fourth input fiber 2510 providing four times as much power as that provided by first input fiber 2504. Similarly, FIG. 31 shows a 13:1 power ratio.

Different input fibers or combinations of input fibers can be temporally modulated (e.g., rapidly switched to apply power at different times to different input fibers) such that, with respect to the workpiece, the delivered beam over time is an average of the different inputs. The switching between each output beam shape may occur at frequencies from single Hz to multiple MHz or higher. In general, any temporal waveform can be applied to any of the input beams.

Many laser welding and additive manufacturing applications, such as those using two-or three-axis scanners, require the laser beam to have sufficiently low divergence to avoid overheating and damage to the process optics. As a result, optical beam delivery system 2500 described here can be optimized to produce low divergence and with second-moment beam diameters sizes ranging from about 50 to 300 $\mu$m. By varying the power in the central beam and the power in the ring beam independently, properties of a weld such as the welding mode (conduction versus keyhole), weld depth, and features related to the weld melt pool dynamics (smoke, spatter, porosity, process stability) can be optimized for a given application.

Skilled persons will appreciate that the different radial offsets achieved via three separate step-index fibers may, in some embodiments, be achieved via one fiber bundle or multi-core fiber, as explained previously. Also, the input and output GRIN lenses may have different effective focal lengths, for magnification or demagnification. Other design optimizations described previously may be implemented, such as, for example, optional step-up or step-down splices, use of an FFC/FFS, and various CLSs. In the present example, CLSs 2518 are shown at the input step-index fiber and at the input of the divergence-preserving fibers. Further customization of the system is possible including any of the following. An optional CLS may be added to the step-index fiber on fused fiber combiner 2512 output. A splice to a second step-index fiber (optionally with a different core or cladding diameter) before output GRIN fiber 2516 can be added. An FFC/FFS may be employed between fused fiber combiner 2512 output step-index fiber and a step-index delivery fiber containing output GRIN fiber 2516.

Mapped Divergence Distribution

Some industrial fiber and fiber-coupled lasers provide a flat-top or approximately flat-top near-field intensity distribution. When such a beam is imaged or focused, it typically maintains a flat-top shape within approximately ±1 Rayleigh length of the beam waist. Outside of that range (i.e., further away from the beam waist than approximately $\pm 1$ Rayleigh length), the beam intensity distribution is no longer a flat-top distribution and is often closely approximated by a Gaussian or super-Gaussian shape, which is not ideal for some applications.

In some laser applications (e.g., welding, cutting, brazing, soldering, heat treatment, and additive manufacturing, among others), there may be useful benefits from operating away from the laser focus, e.g., to adjust the beam size at the workpiece, while maintaining a flat-top intensity distribution. This capability, however, is not available with current lasers because the beam does not maintain a flat-top shape as it propagates away from beam waist. The size of a flat-top (near-field) beam can be varied using a zoom lens (and working near the beam waist), but this approach adds cost and complexity and can degrade tool performance and reliability compared to a fixed-optic (non-zoom) process head.

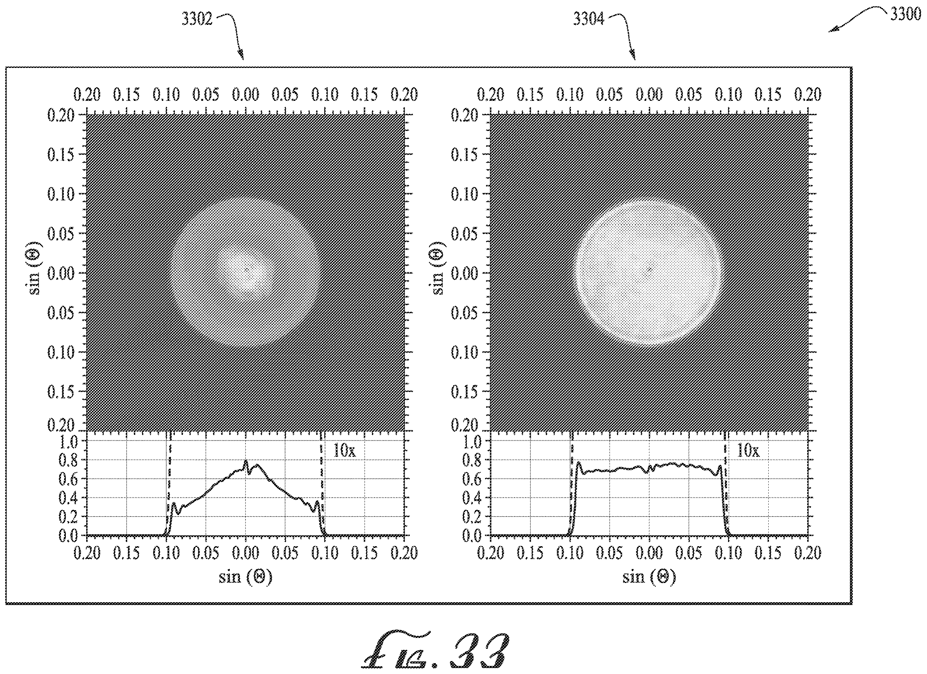

The needs of the aforementioned applications could be met by providing a flat-top far-field divergence distribution (see e.g., right side of FIG. 33), so that the intensity distribution outside of approximately $\pm 1$ Rayleigh length of the beam waist maintains a flat-top intensity distribution. Because second GRIN fiber 136 (FIG. 1) maps the position in divergence-preserving fiber 132 (or in optional fiber 160 after splice 158) to angle as described previously, the output divergence distribution from fiber assembly 104 is determined by the intensity distribution received at second GRIN fiber 136. For example, a flat-top intensity profile in fiber 132, 160 results in a flat-top far-field divergence profile at the output of fiber assembly 104. The divergence distribution is largely independent of the beam characteristics (including the divergence) of the input beam(s). Such an engineered, stable, and reproducible divergence profile is desirable for many applications.

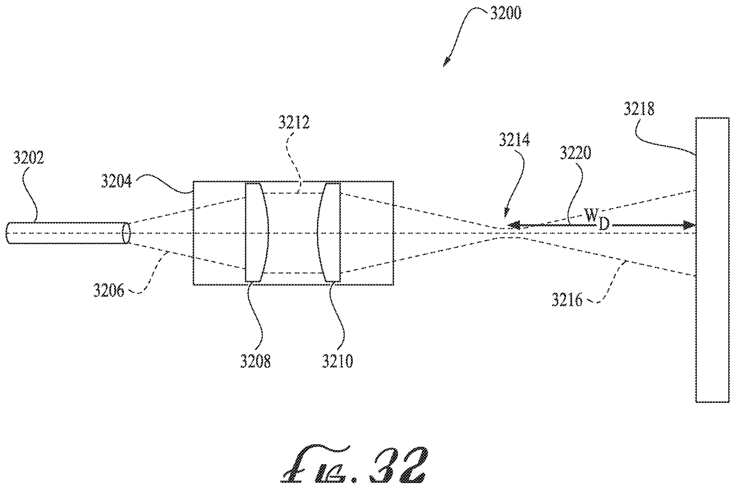

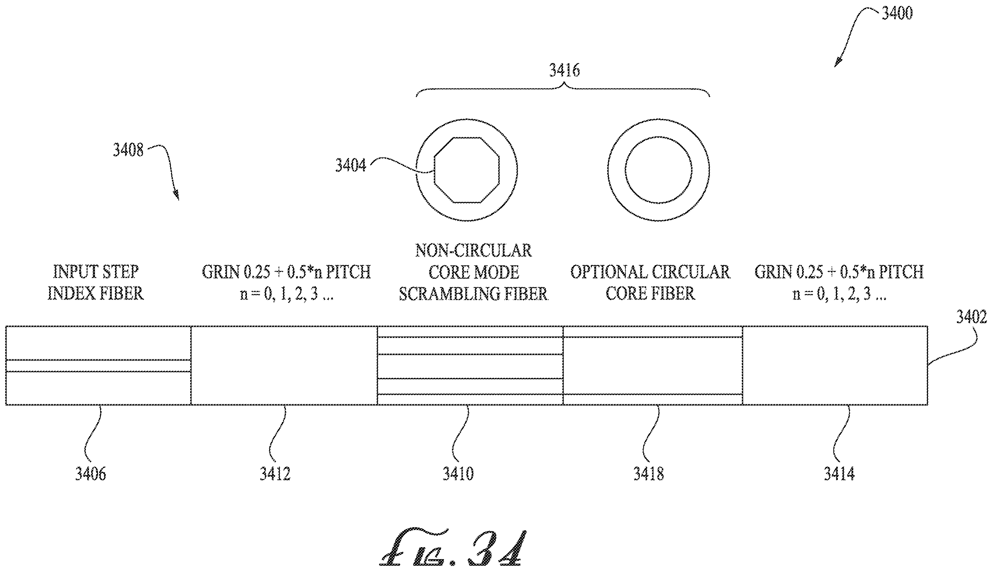

FIG. 32 shows an optical beam delivery system 3200 including a delivery fiber (i.e., a feeding or process fiber) 3202 providing to a process head 3204 a beam 3206 having a flat-top divergence distribution. Examples of delivery fiber 3202 are provided below with reference to FIG. 34-FIG. 37.

Process head 3204 includes a collimating lens 3208 and a focusing lens 3210. Other configurations of process head 3204 are possible, including additional lenses, multiplet lenses, zoom optics, reflective optics, scanners, etc.

In the example of FIG. 32, process head 3204 produces a collimated beam 3212 from beam 3206 and then focuses collimated beam 3212 towards a beam waist 3214. Because beam 3206 has a flat-top divergence distribution, output beam 3216 maintains its flat-top shape as it reaches a surface of a workpiece 3218 located in the far-field, away from beam waist 3214. Output beam 3216 maintains its flat-top shape away from the focus such that the area of output beam 3216 incident workpiece 3218 can be readily scaled up or down by varying working distance ($W_D$) 3220 to be, respectively, farther or nearer beam waist 3214 without introducing any change in its relative distribution of intensity.

FIG. 33 shows camera measurements 3300 of far-field divergence distributions. A first measurement 3302 is from an image relay fiber assembly having only a circular core fiber, as described previously with reference to FIG. 1 and FIG. 2. A second measurement 3304 is from output 3402 (FIG. 34) of optical beam delivery system 3400 that includes non-circular core mode-scrambling fiber 3404. In second measurement 3304, the far-field distribution is more uniform and more flat-top in shape compared to that of first measurement 3302.

A flat-top beam is one having a high flatness factor (1 for an ideal flat-top) as defined by ISO 13694:2005. The table below shows that, in FIG. 33, the left distribution (first measurement 3302) has a flatness factor of 0.45 and the right distribution (second measurement 3304) has a flatness factor of 0.79. These beams were analyzed using a standard clip-level limit of 13.5%. For some laser processing applications, a flat-top divergence distribution corresponds to a flatness factor of greater than 0.6. Note that other metrics or specifications may be used to define the flat-top beam shape, depending on the needs of the application.

| ISO 13694:2005 metric | Ideal flat-top | circular fiber only (left) | octagonal fiber (right) |
|---|---|---|---|
| Flatness factor ($F_\eta$, $\eta = 13.5\%$) | $F_\eta \to 1$ | 0.45 | 0.79 |

FIG. 34 shows an optical beam delivery system 3400 including an input fiber 3406 coupled to a series fiber assembly 3408 to provide a flat-top divergence distribution (see, e.g., right-side image of FIG. 33) at an output 3402. In various embodiments, an input beam could be coupled from a multimode fiber, single-mode fiber, multi-core fiber, ring fiber, fiber bundle, or free space.

In general, fiber assembly 3408 has the same configuration as that described previously in the far-field image relay configurations (e.g., fiber assembly 104 and image relay fiber assembly 204). In the example of FIG. 34, however, a divergence-preserving fiber 3410, deployed between a first GRIN fiber 3412 and a second GRIN fiber 3414, also includes a mode-distribution homogenization portion 3416. For instance, divergence-preserving fiber 3410 includes a non-circular core mode-scrambling fiber 3404.

ISO 11145:2018 defines a "circular power density distribution," i.e., one that is azimuthally symmetrical, as a beam having an ellipticity greater than or equal to 0.87. When a circular aperture is desired, an optional circular core divergence-preserving fiber 3418 is coupled between non-circular core mode-scrambling fiber 3404 and second GRIN fiber 3414. Otherwise, the flat-top far-field intensity distribution may not have a circular shape (e.g., it would have an octagonal shape for octagonal fiber 3404). Such non-circular apertures may be desirable for some applications.

As described previously, first GRIN fiber 3412 acts as a lens to transform the near-field intensity distribution of an input beam (not shown) into a far-field angular distribution. Then, non-circular core mode-scrambling fiber 3404 acts to scramble the modes and homogenize the intensity distribution within fiber 3404 without significantly changing the divergence distribution. Next, circular core divergence-preserving fiber 3418 is spliced after non-circular core mode-scrambling fiber 3404 (i.e., to generate a flat-top intensity distribution) and before second GRIN fiber 3414 to ensure that the output flat-top divergence distribution from the fiber assembly has a circular aperture. By homogenizing the near-field intensity distribution prior to applying it to second GRIN fiber 3414, second GRIN fiber 3414 acts as a lens to transform the flat-top intensity distribution within circular core divergence-preserving fiber 3418 into a flat-top far-field angular distribution.

In some embodiments, non-circular core mode-scrambling fiber 3404 is a step-index fiber. Non-circular core mode-scrambling fiber 3404 is shown as having an octagonal shaped core. In other embodiments, a mode scrambling fiber could have a core that is rectangular, hexagonal, D-shaped, or another non-circular shape capable of homogenizing the mode distribution in the fiber. Also, non-circular core mode-scrambling fiber 3404 may contain a CLS, as described previously with reference to CLS 162 (FIG. 1). The length of fiber 3404 would typically be approximately 0.1-2 m without a CLS and approximately 2-5 m with a CLS, although other lengths are possible.

In some embodiments, non-circular core mode-scrambling fiber 3404 can be omitted and the structure will still provide a flat-top far-field divergence distribution, depending on the characteristics of the input source and launch conditions into first GRIN fiber 3412.

In some embodiments, circular core divergence-preserving fiber 3418 is a step-index fiber. As shown in FIG. 34, circular core divergence-preserving fiber 3418 has about the same core diameter as that of non-circular core mode-scrambling fiber 3404 (or a slightly larger diameter) to ensure there is minimal loss to the cladding at the splice. The difference in the core size between circular core divergence-preserving fiber 3418 and input fiber 3406 depends on the focal length of first GRIN fiber 3412.

In some embodiments, first GRIN fiber 3412 can be omitted and the output divergence distribution will remain a flat-top. In this embodiment, however, the output near-field intensity distribution would no longer be an image of the input near-field intensity distribution.

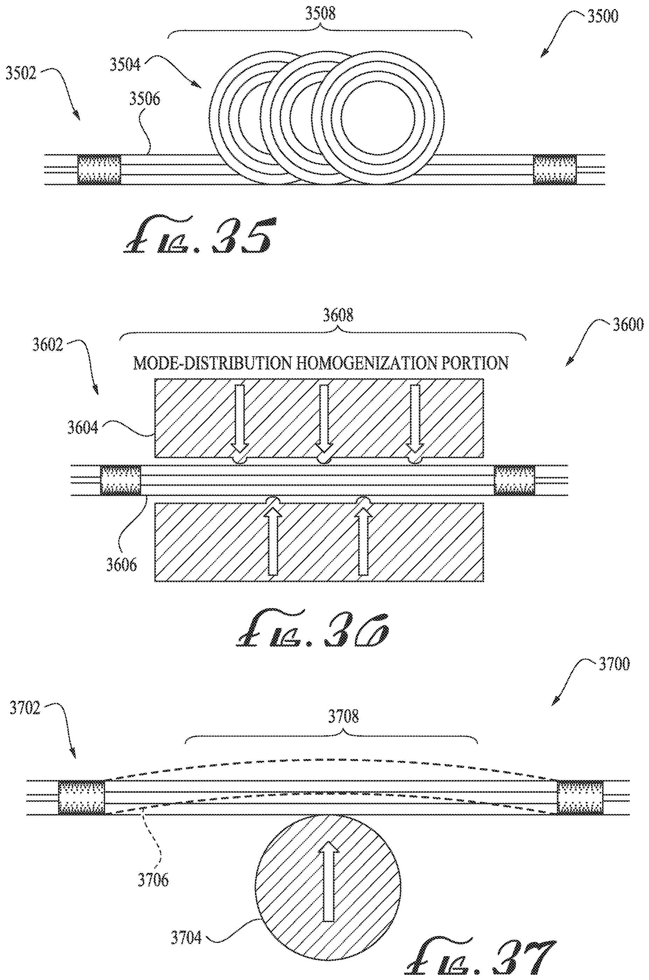

FIG. 35-FIG. 37 show other example embodiments for achieving the desired mode scrambling and thus flat-top far-field divergence distribution (i.e., without of use of non-circular core fiber).

For instance, FIG. 35 shows an optical beam delivery system 3500 having a fiber assembly 3502 that includes one or more coils 3504 in a diverge-preserving fiber 3506 for imparting in a mode-distribution homogenization portion 3508 mode scrambling of the intermediate beam guided by diverge-preserving fiber 3506. Otherwise, optical beam delivery system 3500 is functionally similar to optical beam delivery system 3400 (FIG. 34) in terms of mode scrambling. In some embodiments, one or more coils 3504 are established by wrapping diverge-preserving fiber 3506 around a fixture.

In another example, FIG. 36 shows an optical beam delivery system 3600 having a fiber assembly 3602 in which a micro-bend device 3604 is used for micro-bending a diverge-preserving fiber 3606 so as to impart in a mode-distribution homogenization portion 3608 mode scrambling of the intermediate beam guided by diverge-preserving fiber 3606. Otherwise, optical beam delivery system 3600 is functionally similar to optical beam delivery system 3400 (FIG. 34) in terms of mode scrambling. In some embodiments, micro-bend device 3604 includes one or more structures that perturb the fiber.

In another example, FIG. 37 shows an optical beam delivery system 3700 having a fiber assembly 3702 in which a mandrel 3704 (or other device) is used for macro-bending a diverge-preserving fiber 3706 so as to impart in a mode-distribution homogenization portion 3708 mode scrambling in the intermediate beam guided by diverge-preserving fiber 3706. Otherwise, optical beam delivery system 3700 is functionally similar to optical beam delivery system 3400 (FIG. 34) in terms of mode scrambling. In some embodiments, mandrel 3704 includes one or more structures that perturb the fiber, e.g., to create one or more macro-bends that may have the same or different bend radii.

Skilled persons will appreciate that other mode-distribution homogenization techniques may also be employed. For instance, an offset splice may also be used to excite more or a different combination of modes than a non-offset (centered) splice. The intensity distribution in the second fiber following a splice will depend on the launch conditions of the first fiber. Changing the properties of the input beam, the launch angle (splice angle), or radial offset impacts the output fiber intensity distribution. For a splice in where the core diameters increase, adding a radial offset between fiber cores may cause the output intensity distribution to be flatter.

Most laser beams have a featureless shape in the far field (i.e., a distance at least several Rayleigh lengths away from the beam waist); the far-field beam shape is often nearly Gaussian or super-Gaussian. For some industrial applications, particularly those in which the workpiece is positioned in the far field (see e.g., FIG. 32), a specific and consistent far-field beam shape would be useful. As discussed above with reference to FIG. 33, an appropriately positioned short-focal-length lens at the output of a step-index fiber maps the near-field intensity distribution to the divergence distribution (and thus the far-field beam shape). By suitably populating the modes of the step-index fiber, the intensity distribution at the output end of the fiber is uniform, and the lens thus maps this beam shape to the far-field beam shape. If a core of the step-index fiber is circular, then far-field beam shape will also be circular (and flat-top).

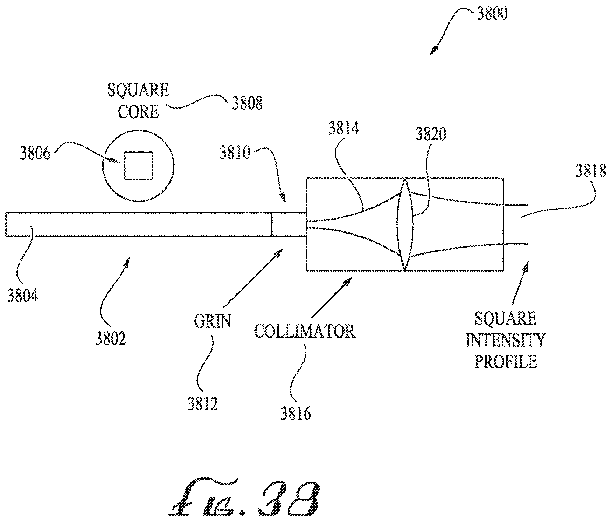

In contrast, FIG. 38 shows an example of how an optical beam delivery system 3800, including a fiber assembly 3802, provides other flat-top shapes (square, octagonal, etc.) based on a choice of corresponding core shapes for a step-index fiber 3804. Specifically, step-index fiber 3804 includes an azimuthally non-symmetric core shape 3806, which in the present example is a square core 3808. In FIG. 38, square core 3808 is shown, but the approach is general, and any core shape and/or multiple cores could be used.

Step-index fiber 3804 generates or propagates a specific beam shape and is followed by a short-focal-length lens 3810, e.g., a GRIN fiber 3812, that maps this beam shape to a divergence distribution 3814 and thus the far-field beam shape that corresponds to azimuthally non-symmetric core shape 3806. Short-focal-length lens 3810 is typically a ¼-pitch length of GRIN fiber spliced to step-index fiber 3804, although other implementations are possible.

FIG. 38 also shows how a collimator 3816 is then used for transforming a far-field shape to the same shape in the near-field (square intensity profile 3818, with optional magnification) by placement of a free-space lens 3820 downstream from fiber assembly 3802 (near the focus, about ±1 Rayleigh length), so that short-focal-length lens 3810 and free-space lens 3820 form a telescope that images the beam shape defined by the intensity distribution within square core 3808. Free-space lens 3820 could be refractive (including a multiplet) or reflective.

An advantage of this approach is that the near-field beam has a larger depth of focus (process window) because the workpiece is placed near the beam waist. In laser applications, the depth of focus relates to how precise the positioning of the laser needs to be relative to the workpiece to achieve effective results. The optical definition of depth of focus is $2\times$ the Rayleigh range. The collimated beam in FIG. 38 has a much larger depth of focus/Rayleigh range-specifically the depth of focus/Rayleigh range increases by the square of the magnification. For the fiber laser configurations in this disclosure, a collimated beam may have a depth of focus between 0.1 to 10 meters. The large depth of focus ensures the laser is effective over a large range of distances, especially when dealing with surfaces that are not perfectly flat or when the laser is to maintain its effect as it moves across the surface of the material. The beam would also be relatively large because of the magnification, with a consistent near-field size available for a given lens combination (i.e., since the magnification is equal to the ratio of the focal lengths of free-space lens 3820 to short-focal-length lens 3810).

In another configuration, skilled persons will appreciate that such an engineered far-field beam shape (i.e., an engineered divergence profile) would enable the shaped beam size on the workpiece to be varied or optimized by changing the location in the far field while maintaining the same beam shape. Thus, instead of a circular shape in FIG. 32, various other non-circular shapes may be deployed.

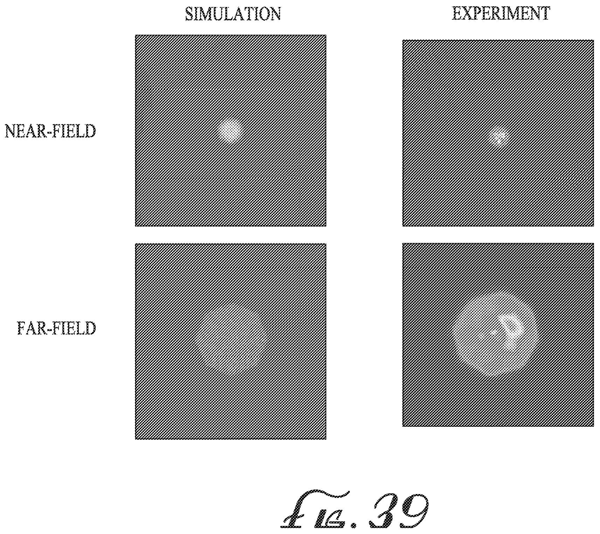

FIG. 39 shows how other flat-top shapes (square, octagonal, etc.) may be obtained by choice of the corresponding core shapes for step-index fiber 3804 (FIG. 38). Step-index fiber 3804 with a non-circular core (e.g., square, hexagonal, or octagonal) would produce generate the corresponding far-field beam shapes (square, hexagonal, or octagonal, respectively). An example of an octagonal far-field beam is shown in FIG. 39.

When heat-treating or brazing a surface, a square or rectangular beam shape would allow optimum use of the available laser power by minimizing the overlap of subsequent passes of the laser beam over different regions of the surface. In another embodiment, a beam comprised of multiple spots (optionally with different sizes and/or intensities for different spots) from different cores in a MCF or bundle would also improve some welding and brazing applications. Step-index fiber 3804 with two or more circular or non-circular cores that are offset from each other would generate the corresponding far-field beam shapes (i.e., multiple spots).

A pedestal beam shape (central spot surrounded by a lower-intensity halo) minimizes deleterious effects such as spatter when welding. Pedestal beams can also be useful for maximize cutting speeds. Methods exist for generating near-field pedestal beams, but these beams typically do not maintain their shapes in the far field. Thus, obtaining different size pedestal beams entails changing the magnification of the process optics by changing lens focal lengths, by use of a zoom head, or by use of different fibers (possibly including a fiber-to-fiber coupler or switch); all these approaches add cost, complexity, and failure modes. Step-index fiber 3804 with a central core surrounded by a ring-shaped core in which some power is coupled into both cores would generate a pedestal beam or saddle beam in the far field.

Ring beams and saddle-shaped beams (i.e., a ring with lower intensity in the center) are useful for maximizing productivity and material quality in additive manufacturing tools. As with a pedestal beam, methods exist for generating near-field ring and saddle beams, but these shapes are not maintained in the far field. Step-index fiber 3804 with a ring-shaped core would generate a ring-shaped far-field beam shape.

Concluding Remarks

Having described and illustrated the general principles of examples of the presently disclosed technology, it should be apparent that the examples may be modified in arrangement and detail without departing from such principles. For example, an optional splice 158 (FIG. 1) or optional FFC/FFS 170 may be included in any of the embodiments. Non-circular core mode-scrambling fiber 3404 (or another mode-distribution homogenization device) may be included in any of the embodiments. Also, the embodiments described above employ a divergence-preserving fiber, which is the middle section having a raised-index core relative to a first cladding, but in some other embodiments the fiber may have multiple concentric claddings. Skilled persons, therefore, will appreciate that many changes may be made to the details of the above-described embodiments without departing from the underlying principles of the invention. The scope of the present invention should, therefore, be determined only by the following claims.

The following numbered clauses may also define embodiments of the invention:

(Clause 1). An optical beam delivery system configured to provide a flat-top divergence distribution, the system comprising:

a source fiber configured to provide an input beam; and
a fiber assembly, comprising:

a first lens coupled to the source fiber to receive therefrom the input beam and convert it to an intermediate beam;
a divergence-preserving fiber including a mode-distribution homogenization portion so as to generate from the intermediate beam a flat-top intensity distribution; and
a second lens configured to convert the flat-top intensity distribution to an output beam having the flat-top divergence distribution.

(Clause 2). A method of providing a flat-top divergence distribution, the method comprising:

directing an input beam to a first lens that is configured to map an input transverse spatial intensity distribution to a divergence distribution of an intermediate beam;
guiding, with a divergence-preserving fiber, the intermediate beam through a mode-distribution homogenization portion and thereby generating a flat-top intensity distribution;
converting, with a second lens, the flat-top intensity distribution into an output transverse spatial intensity distribution so to generate an output beam having the flat-top divergence distribution.

(Clause 3). The method of clause 2, further comprising launching the modified beam toward a process head such that a far-field beam shape is maintained on a workpiece with a beam size that varies a function of a distance to the workpiece.

(Clause 4). The optical beam delivery system of clause 1 or the method of clause 2, in which the mode-distribution homogenization portion includes an offset splice.

(Clause 5). The optical beam delivery system of clause 1 or the method of clause 2, in which the mode-distribution homogenization portion includes a mode-scrambling portion.

(Clause 6). The optical beam delivery system of clause 5 or the method of clause 5, in which the divergence-preserving fiber includes a non-circular core configured to act as the mode-scrambling portion.

(Clause 7). The optical beam delivery system of clause 5 or the method of clause 5, in which the mode-scrambling portion extends the entire length of the divergence-preserving fiber.

(Clause 8). The optical beam delivery system of clause 1 or the method of clause 2, in which the divergence-preserving fiber includes a circular core to define a circular aperture for the output beam.

(Clause 9). The optical beam delivery system of clause 1 or the method of clause 2, in which the divergence-preserving fiber includes one or more micro-bends configured to act as the mode-distribution homogenization portion.

(Clause 10). The optical beam delivery system of clause 1 or the method of clause 2, in which the divergence-preserving fiber includes one or more coils configured to act as the mode-distribution homogenization portion.

(Clause 11). The optical beam delivery system of clause 1 or the method of clause 2, in which the divergence-preserving fiber includes one or more macro-bends configured to act as the mode-distribution homogenization portion.

(Clause 12). The optical beam delivery system of clause 1 or the method of clause 2, in which an input transverse spatial intensity distribution of the input beam is Gaussian, super-Gaussian, flat-top, ring-shaped, saddle-shaped, pedestal-shaped, variable, or static.

(Clause 13). The optical beam delivery system of clause 1 or the method of clause 2, in which the source fiber is a ring fiber.

(Clause 14). The optical beam delivery system of clause 1 or the method of clause 2, in which one or both of the first and second lenses are GRIN lenses having a ¼ + ½*n pitch length, where n equals zero or any positive integer.

(Clause 15). The optical beam delivery system of clause 1 or the method of clause 2, in which one or both of the first and second lenses are ball lenses or radiused end caps.

(Clause 16). The optical beam delivery system of clause 1 or the method of clause 2, in which the divergence-preserving fiber is a step-index fiber.

(Clause 17). The optical beam delivery system of clause 1 or the method of clause 2, in which the first lens has a first effective focal length, and the second lens has a second effective focal length that is different from the first effective focal length to magnify or demagnify the output beam.

(Clause 18). The optical beam delivery system of clause 1 or the method of clause 2, further comprising an output end cap coupled to an output of the second lens.

(Clause 19). The optical beam delivery system of clause 1 or the method of clause 2, further comprising a splice in the divergence-preserving fiber, and in which the splice steps up or down a diameter of one or both a core and a cladding of the divergence-preserving fiber.

(Clause 20). An optical beam delivery system configured to provide a divergence distribution mapped from an azimuthally non-symmetric core shape, the system comprising:

a step-index fiber configured to provide an initial beam, the step-index fiber having the azimuthally non-symmetric core shape; and
a lens coupled to the step-index fiber to receive therefrom the initial beam and convert it to a modified beam having the divergence distribution.

(Clause 21). A method of generating a divergence distribution mapped from an azimuthally non-symmetric core shape, the method comprising:

guiding with a step-index fiber an initial beam in the azimuthally non-symmetric core shape; and
receiving the initial beam at a lens coupled to the step-index fiber to receive therefrom the initial beam and convert it to a modified beam having the divergence distribution.

(Clause 22). The optical beam delivery system of clause 20 or the method of clause 21, in which the lens is a GRIN lens having a ¼ + ½*n pitch length, where n equals zero or any positive integer.

(Clause 23). The optical beam delivery system of clause 20 or the method of clause 21, in which the azimuthally non-symmetric core shape includes a square shape.

(Clause 24). The optical beam delivery system of clause 20 or the method of clause 21, in which the azimuthally non-symmetric core shape includes a rectangular shape.

(Clause 25). The optical beam delivery system of clause 20 or the method of clause 21, in which the azimuthally non-symmetric core shape includes multiple circular cores that are spaced apart from each other.

(Clause 26). The optical beam delivery system of clause 20 or the method of clause 21, in which the azimuthally non-symmetric core shape includes a ring shape.

(Clause 27). The optical beam delivery system of clause 20 or the method of clause 21, further comprising a collimator lens to receive the modified beam and transform it to a collimated beam having near-field shape corresponding to the azimuthally non-symmetric core shape and a depth of focus in a range from about 0.1 to about 10 meters.

**Claims**

1. An optical beam delivery system configured to provide a divergence distribution mapped from an azimuthally non-symmetric core shape, the system comprising:

   a step-index fiber configured to provide an initial beam, the step-index fiber having the azimuthally non-symmetric core shape; and
   a lens coupled to the step-index fiber to receive therefrom the initial beam and convert it to a modified beam having the mapped divergence distribution.

2. A method of generating a divergence distribution mapped from an azimuthally nonsymmetric core shape, the method comprising:

   guiding with a step-index fiber an initial beam in the azimuthally non-symmetric core shape; and
   receiving the initial beam at a lens coupled to the step-index fiber to receive therefrom the initial beam and convert it to a modified beam having the divergence distribution.

3. The optical beam delivery system of claim 1 or the method of claim 2, in which the lens is a GRIN lens having a ¼ + ½*n pitch length, where n equals zero or any positive integer.

4. The optical beam delivery system of claim 1 or the method of claim 2, in which the azimuthally non-symmetric core shape includes a polygonal shape having between four and eight sides, where the polygon incorporates two lines of geometric symmetry and two orders of rotational symmetry.

5. The optical beam delivery system of claim 1 or the method of claim 2, in which the azimuthally non-symmetric core shape includes one of a square shape or a rectangular shape.

6. The optical beam delivery system of claim 1 or the method of claim 2, in which the azimuthally non-symmetric core shape includes multiple circular cores that are spaced apart from each other.

7. The optical beam delivery system of claim 1 or the method of claim 2, in which the azimuthally non-symmetric core shape includes a ring shape.

8. The optical beam delivery system of claim 1 or the method of claim 2, further comprising a circular core fiber disposed between the step-index fiber and the lens.

9. The optical beam delivery system of claim 1 or the method of claim 2, further comprising a collimator lens to receive the modified beam and transform it to a collimated beam having near-field shape corresponding to the azimuthally non-symmetric core shape and a depth of focus in a range from about 0.1 to about 10 meters.

*fig.1*

SOURCES:
* STEP-INDEX FIBERS
* RING FIBERS
* FIBER BUNDLES, etc.
* FFC/FFS

MAPS
POSITION TO ANGLE
* GRIN LENSES,
* RADIUSED END CAPS
* BALL LENSES, etc.

PRESERVES ANGLE

OPTIONAL:
* CLS,
* SPLICE,
* FFC/FFS, etc.

FFC/FFS

MAPS ANGLE
TO POSITION
* GRIN LENSES,
* RADIUSED END CAPS
* BALL LENSES, etc.

* MAGNIFIED OR DEMAGNIFIED OUTPUT BEAM
* SRS-REDUCING FEEDING FIBER
* MAXIMUM NA ENGINEERED INTO THE FIBER
* RING/COMPOSITE OUTPUT BEAM

$n_{core}$

$n_{cladding}$

$d_{core}$

CLS

EP 4 707 886 A2

INPUT
STRUCTURED
NEAR FIELD

FAR FIELD

OUTPUT
STRUCTURED
NEAR FIELD

| 202 | 1/4 PITCH GRIN FIBER A | STEP INDEX FIBER | 228 | 1/4 PITCH GRIN FIBER B | END CAP |

$\mathcal{Fig.2}$

EP 4 707 886 A2

**Fig. 3**

400

| SCHEMATIC | OUTPUT BPP (mm-mrad) |
|---|---|
| A    100 $\mu$m CORE STEP INDEX FIBER | 3.6 |
| B    100 $\mu$m CORE STEP INDEX FIBER    GRIN A    125 $\mu$m CORE STEP INDEX FIBER    GRIN B | 5.5 |
| C    100 $\mu$m CORE STEP INDEX FIBER    GRIN A    GRIN B | 3.6 |

402
100
300

*Fig. 4*

END CAP

514

512

GRIN FIBER

506

500

526

508

STEP INDEX
FIBER WITH
LARGER CORE

524

502

GRIN FIBER

504

518

516

INPUT STEP
INDEX FIBER

510

528

522

Aeff

520

*Fig. 5*

600

606

30 METERS

602    50 μm CORE
STEP INDEX
FIBER

END CAP

0.5 mm
EFFECTIVE FOCAL
LENGTH GRIN

604    50 μm CORE
STEP INDEX
FIBER

0.5 mm
EFFECTIVE FOCAL
LENGTH GRIN

606                                                                    END CAP

608

OUTPUT
NEAR-FIELD
INTENSITY
DISTRIBUTION:

FIG. 6

EP 4 707 886 A2

SRS VS. OUTPUT POWER (W)

FEEDING FIBER TYPE

| | |
|---|---|
| • 30 M, 50 MICRON, STEP-INDEX FEEDING FIBER | ⊚ 30 M FEEDING FIBER THAT ALSO PRODUCES A 50 MICRON NEAR-FIELD BEAM DIAMETER |

*Fig. 7*

*Fig. 8*

FIG. 9

*Fig. 10*

LASER SOURCE

LASER OUTPUT

1100

1002

1104

1106

1118

1116

1120

1110

1114

1112

GRIN

CLS

1108

1122

*Fig.11*

|  | NEAR-FIELD INTENSITY | FAR-FIELD INTENSITY |
|---|---|---|
| LASER SOURCE | | |
| OUTPUT FIBER | | |

FIG.12

DIVERGENCE DISTRIBUTION FOR SINGLE GRIN FIBER CLS

| | INPUT FIBER DIVERGENCE |
| --- | --- |
| | OUTPUT FIBER DIVERGENCE |

*Fig. 13*

EP 4 707 886 A2

*Fig.14*

Fig. 15

EP 4 707 886 A2

DIVERGENCE DISTRIBUTION FOR DOUBLE GRIN FIBER CLS

*Fig.16*

LASER SOURCE WITH
FIBER CORE RADIALLY
OFFSET FROM GRIN

GRIN 0.25 + 0.5*n PITCH
$n = 0, 1, 2, 3 \ldots$

STEP INDEX FIBER

GRIN 0.25 + 0.5*n PITCH
$n = 0, 1, 2, 3 \ldots$

1700

1704

1710

1716

1720

1722

1712    1714    1718

1702

1706

ANGULAR OFFSET
ADDED TO BEAM

ANGULAR DISTRIBUTION
IS PRESERVED WITH
AZIMUTHAL
SCRAMBLING

1708

CONVERTS ANGULAR
DISTRIBUTION INTO
RING BEAM

*fig.17*

FIBER WITH OFFSET CORE

*Fig.18*

1900

INPUT FIBER WITH OFFSET
SPLICE TO INPUT GRIN

1706

1902

1904    1906

1716

*Fig.19*

INPUT NEAR FIELD            OUTPUT NEAR FIELD

no offset

40μm offset

80μm offset

FIG.20

2100

FIBER BUNDLE
7 FIBER EXAMPLE, 4 ACTIVE

2102

2102

2104

2102

Fig. 21

2200

FIBER BUNDLE
19 FIBER EXAMPLE, 3 ACTIVE

FIG. 22

2300

MULTI-CORE FIBER

2302

2302

2304

2302

*FIG. 23*

Fig. 24

Fig.25

FIG. 26

FIG. 27

*Fig.28*

*Fig.29*

*Fig.30*

*Fig. 31*

*Fig. 32*

EP 4 707 886 A2

Fig. 33

EP 4 707 886 A2

3400

3416

3408

3404

NON-CIRCULAR
CORE MODE
SCRAMBLING FIBER

INPUT STEP
INDEX FIBER

GRIN 0.25 + 0.5*n PITCH
n = 0, 1, 2, 3 ...

OPTIONAL CIRCULAR
CORE FIBER

GRIN 0.25 + 0.5*n PITCH
n = 0, 1, 2, 3 ...

3402

3406

3412

3410

3418

3414

*Fig.34*

_Fig. 35_

MODE-DISTRIBUTION HOMOGENIZATION PORTION

_Fig. 36_

_Fig. 37_

SQUARE
CORE ⟶ 3808

3806

3810

3814    3820    3818

GRIN    COLLIMATOR    SQUARE
INTENSITY
PROFILE

3804

3802

3812    3816

Fig. 38

EP 4 707 886 A2

65

Fig. 39

**EP 4 707 886 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 63499700
- US 63499701 B
- US 63499702 B
- US 63499703 B
- US 63499705 B
- US 63591051
- US 63591053 B
- US 10663768 B, Martinsen
- US 9250390 B
- US 9823422 B, Muendel and Kliner
- US 20230106619 A1

### Non-patent literature cited in the description

- **W. J. SMITH**. Modern Optical Engineering. McGraw-Hill, Inc., 2000, 286